# EUROPEAN PATENT SPECIFICATION

(11) **EP 3 739 817 B1**
(45) Date of publication and mention of the grant of the patent: **21.06.2023**
(21) Application number: 19748132.8
(22) Date of filing: 25.01.2019
(51) Int. Cl.: H04L 12/28, H04L 9/40

(54) **NETWORK SECURITY ACCESS METHOD AND HOME NETWORK DEVICE**
NETZWERKSICHERHEITSZUGRIFFSVERFAHREN UND HEIMNETZWERKVORRICHTUNG
PROCÉDÉ D'ACCÈS DE SÉCURITÉ AU RÉSEAU ET DISPOSITIF DE RÉSEAU DOMESTIQUE

(30) Priority: 01.02.2018 CN 201810101960
(43) Date of publication of application: 18.11.2020
(73) Proprietor: HUAWEI TECHNOLOGIES CO., LTD., Shenzhen, Guangdong 518129 (CN)
(72) Inventor: LAI, Wai Kuen, Shenzhen, Guangdong 518129 (CN); WANG, Shunbao, Shenzhen, Guangdong 518129 (CN); PAN, Dao, Shenzhen, Guangdong 518129 (CN); ZHOU, Jian, Shenzhen, Guangdong 518129 (CN); DENG, Li, Shenzhen, Guangdong 518129 (CN); LIU, Jun, Shenzhen, Guangdong 518129 (CN)
(74) Representative: Pfenning, Meinig & Partner mbB
(86) International application number: PCT/CN2019/073204
(87) International publication number: WO 2019/149151

(56) References cited:
- EP-A1- 3 258 646
- CN-A- 104 253 853
- CN-A- 106 559 357
- CN-A- 106 559 357
- CN-A- 107 295 510
- US-B1- 8 085 802

## Description

### TECHNICAL FIELD

This application relates to the field of communications technologies, and in particular, to network secure admission and a home network device.

### BACKGROUND

A home network (home network) technology refers to a technology of communication and interconnection between networks inside a home. There are abundant home network mediums, and common mediums include a coaxial cable, a twisted pair, a power line, a plastic optical fiber, and the like.

Standards including ITU-T G.hn, IEEE Homeplug, MOCA, and the like all define home network technologies on various home network mediums. The ITU-T G.hn supports a coaxial cable, a twisted pair, a power line, and a plastic optical fiber. The IEEE Homeplug supports a power line. The MOCA supports a coaxial cable.

A home network user connects to a user terminal downwards and connects to the internet upwards, and a terminal interconnection service in a home network and a service from a terminal to the internet are provided.

Most home network mediums are open. Therefore, in a process of performing network communication by using a medium such as a power line or a coaxial cable, it is easy for a malicious device to perform illegal listening. To prevent the malicious device from performing illegal listening, communications devices (referred to as home network communications devices below) that use these mediums to communicate may use a method of pairing networking to implement security to some extent, thereby preventing the malicious device from performing illegal listening and ensuring communication security. A typical pairing networking implementation is that a home network communications device joins a domain by using a secure admission method. The domain may be understood as a private network constructed between home network devices. The home network devices perform communication in the domain by using a home network medium, so that a malicious node can be prevented from joining the domain, and communication security can be ensured.

At present, a method for performing secure admission by a home network device mainly includes the following two manners.

Manner 1: A user needs to first perform a key pressing operation on an EP node in end point nodes (EP Node) located in a domain. The EP node that receives the key pressing operation sends a notification message to a domain master (DM) node to notify a key pressing event. The domain master node enables a pairing window after receiving the notification message sent by the EP node. The user performs, within an effective period of the pairing window, a key pressing operation on a new home network device that needs to join the domain. After receiving the key pressing operation of the user, the new home network device may send a registration request to the domain master node. After receiving the registration request, the domain master node replies with a registration acknowledgment message, to implement a secure admission process of the new home network device.

Manner 2: A user needs to connect, by using a television screen or a computer, to an EP node located in a domain, and display a status of the EP node by using the screen. The user performs, on the screen, an operation on the EP node located in the domain, to trigger the EP node located in the domain to send a pairing request to a domain master node. After receiving the pairing request, the domain master node enables a pairing window, and broadcasts a medium access plan (medium access plan, MAP) message. After receiving the MAP message, a new home network device that needs to join the domain sends a registration request to the domain master node within an effective period of the pairing window. The domain master node replies to the new home network device with a registration acknowledgment message, closes the pairing window after the pairing window expires, and sends a pairing response to the EP node located in the domain, where the pairing response includes a media access control (media access control, MAC) address or other information of the new home network device that sends the registration request. After receiving the pairing response, the EP node located in the domain may display the MAC address or the other information of the new home network device on the screen. The user selects to admit the registration request of the new home network device on the screen based on the MAC or the other information. The EP node located in the domain sends a pairing request to the domain master node. After receiving the pairing request, the domain master node sends a MAP message in a broadcast manner, where the MAP message carries the MAC address of the new home network device that has been authorized by the user to join the domain. After receiving the MAP message and detecting that the MAP message carries the MAC address of the new home network device, the new home network device initiates a registration request, to implement a pairing operation process of the new home network device.

In the foregoing two secure admission implementations, resource waste may be caused, and illegal joining of a malicious device may occur. Consequently, security is comparatively low.

A Chinese patent publication, numbered as CN106559357, provides a method and system related to how a device accesses a network.

### SUMMARY

Embodiments of this application provide a network secure admission method and a home network device, to improve security of secure admission.

According to a first aspect, a network secure admission method is provided. In the method, a domain master node sends prompt information to a user, where the prompt information is used to prompt that there is a home network device that needs to join a domain for pairing. The domain master node receives an authorization operation of the user, where the authorization operation is used to indicate that the home network device is allowed to join the domain to perform a pairing operation, and the authorization operation is performed by the user according to the prompt information. When receiving the authorization operation of the user, the domain master node enables a pairing window after receiving the authorization operation, and sends indication information within an effective period of the pairing window, where the indication information is used to indicate that the home network device is allowed to join the domain for pairing.

In this embodiment of this application, the user performs the authorization operation according to the prompt information, and the user does not need to use a device such as a television or a computer to cooperate the operation, so that paring networking of a home network is friendlier to the user, and an operation is more convenient. In addition, the authorization operation of the user is used to trigger the domain master node to enable the pairing window, so that a new device is authorized, before the domain master node enables the pairing window, to join the domain, thereby avoiding a case in which there is a new device that is unauthorized, after the pairing window is enabled, to join the domain, avoiding resource waste, and improving security of secure admission (or pairing networking). Moreover, because the user does not need to perform the authorization operation in the pairing window, compared with that in the prior art, the effective period of the pairing window may be set to be comparatively short. This further reduces a possibility of illegal joining of a malicious device, and improves the security of secure admission.

In a possible design, the network secure admission method may be applied to a domain master node or a domain end point node in a home network, or may be applied to a chip in a domain master node or a domain end point node. The domain master node is configured to manage transmission resource allocation between the home network and any node in the home network.

The home network is a network in which communication is performed by using a home network medium, and the home network medium includes at least one of a power line, a twisted pair, a plastic optical fiber, and a coaxial cable.

The domain master node manages a home network device used as a domain end point node to access the home network. When the domain master node receives a notification message that is sent by the home network device and that is used to notify that there is a home network device that needs to access the home network, the domain master node performs the following steps: sending the prompt information to the user, where the prompt information is used to prompt that there is a home network device that needs to access the home network; receiving the authorization operation of the user, where the authorization operation is used to indicate that the home network device is allowed to access the home network, and the authorization operation is performed by the user according to the prompt information; and enabling the pairing window, and sending the indication information within the effective period of the pairing window, where the indication information is used to indicate that the home network device is allowed to access the home network. In this way, the user only needs to perform a simple authorization operation according to the prompt information sent by the domain master node, so that the home network device can automatically access the home network, and perform data transmission. The operation is convenient and simple.

In a possible implementation, the prompt information may be displayed on the domain master node locally. For example, the prompt information may be a light flashing prompt on the domain master node. The authorization operation of the user may be an operation performed by the user on the domain master node. For example, the authorization operation of the user may be a key pressing operation performed on the domain master node. In this way, the user may perform the authorization operation on the domain master node according to the prompt information, and does not need to perform a dual node/point operation on another home network device that accesses the home network and the domain master node. An operation process is user-friendly and easy to understand, the operation is simple and convenient, and the home network device can quickly access the home network.

In another possible implementation, a proxy node, as a user interface device, displays the prompt information to the user, and directly receives the authorization operation of the user. For example, the domain master node instructs the proxy node to provide a light flashing prompt to the user. Alternatively, the authorization operation of the user may be that the user performs a key pressing operation on the proxy node, and the proxy node notifies the domain master node of the key pressing authorization operation of the user. The proxy node may be any domain end point node.

In still another possible implementation, the prompt information sent by the domain master node is sent by the domain master node to a terminal, such as a mobile phone, used by the user, and is displayed on the terminal. For example, the prompt information may be a push message that is sent by the domain master node to the terminal used by the user and that is displayed on the terminal. An application program used by the user to perform the authorization operation is installed on the terminal used by the user. The authorization operation of the user may be triggered by performing an operation by the user on the application program installed on the terminal. In this way, the user may perform a one-click authorization operation on the used terminal according to the prompt information, and does not need to perform a dual node/point operation on another home network device that accesses the home network and the domain master node. The operation is simple and convenient, and the home network device can quickly access the home network.

In another possible design of this embodiment of this application, when receiving a notification message that is sent by the home network device and that is used to notify that there is a home network device that needs to join the domain for paring, the domain master node may send the prompt information to the user based on the notification message. In this embodiment of this application, the home network device that needs to join the domain for paring sends the notification message to trigger the domain master node to perform a pairing operation, and another home network device that has accessed the home network does not need to perform triggering. A processing procedure is comparatively simple.

The notification message may include an identifier of the home network device that sends the notification message. The indication information sent by the domain master node also includes the identifier of the home network device that sends the notification message. In this embodiment of this application, the notification message includes the identifier of the home network device that sends the notification message, and the indication information sent by the domain master node also includes the identifier of the home network device that sends the notification message, so that the home network device corresponding to the identifier can access the home network. In this way, another home network device is prevented from accessing the home network, thereby improving security.

In still another possible design of this embodiment of this application, the domain master node receives the authorization operation of the user, and sends domain name configuration information of the domain master node. As described above, the authorization operation may be a key pressing operation performed directly on the domain master node; or may be a key pressing operation performed on the proxy node, and the proxy node notifies the domain master node of the key pressing operation of the user; or may be an operation performed by using an application on an intelligent terminal. The domain master node receives a domain name configuration acknowledgment message sent by the home network device, where the domain name configuration acknowledgment message is used to indicate that the home network device uses a domain name included in the domain name configuration information of the domain master node as a domain name of the home network device. In this way, the home network device can perform domain name configuration based on the domain name configuration information of the domain master node. Compared with a preconfiguration manner, this manner enables the domain name configuration of the home network device to be more flexible.

According to a second aspect, a network secure admission apparatus is provided. The network secure admission apparatus has functions of implementing the network secure admission method performed by the domain master node in the first aspect or any one of the possible designs of the first aspect. The functions may be implemented by hardware, or may be implemented by hardware executing corresponding software. The hardware or the software includes one or more units corresponding to the foregoing functions.

In a possible design, the network secure admission apparatus includes a sending unit, a receiving unit, and a processing unit. The sending unit is configured to send prompt information to a user. The receiving unit is configured to receive an authorization operation of the user. The processing unit is configured to enable a pairing window when determining that the authorization operation of the user is received. The sending unit is configured to send indication information within an effective period of the pairing window, where the indication information is used to indicate that the home network device is allowed to join a domain for pairing.

The authorization operation of the user is used to trigger the domain master node to enable the pairing window, so that a new device is authorized, before the domain master node enables the pairing window, to join the domain, thereby avoiding a case in which there is a new device that is unauthorized, after the pairing window is enabled, to join the domain, avoiding resource waste, and improving security of secure admission (or pairing networking). Moreover, because the user does not need to perform the authorization operation in the pairing window, compared with that in the prior art, the effective period of the pairing window may be set to be comparatively short. This further reduces a possibility of illegal joining of a malicious device, and improves the security of secure admission.

In another possible design, the network secure admission apparatus includes a sending unit and a receiving unit. The receiving unit is configured to receive an authorization operation of a user. The sending unit is configured to send domain name configuration information of the domain master node. The receiving unit is configured to receive a domain name configuration acknowledgment message sent by a home network device, where the domain name configuration acknowledgment message is used to indicate that the home network device uses a domain name included in the domain name configuration information of the domain master node as a domain name of the home network device.

The network secure admission apparatus may also include a processing unit, where the processing unit is configured to enable a pairing window after the receiving unit receives the domain name configuration acknowledgment message sent by the home network device. The sending unit is further configured to send indication information within an effective period of the pairing window, where the indication information is used to indicate that the home network device is allowed to join a domain for pairing.

In this embodiment of this application, the domain name configuration information of the domain master node is sent, so that the home network device can perform domain name configuration based on the domain name configuration information of the domain master node. Compared with a preconfiguration manner, this manner enables the domain name configuration of the home network device to be more flexible.

The sending unit sends prompt information to the user. The authorization operation received by the receiving unit is performed according to the prompt information sent by the sending unit to the user. The prompt information is used to prompt that there is a home network device that needs to join the domain for pairing.

The prompt information sent by the sending unit is displayed on the domain master node locally or displayed on a proxy node, and the authorization operation received by the receiving unit is an operation performed by the user on the domain master node or the proxy node. For example, the prompt information displayed on the domain master node locally or displayed on the proxy node is a light flashing prompt, and the operation performed by the user on the domain master node or the proxy node is a key pressing operation. Alternatively, the prompt information sent by the sending unit is sent by the domain master node or the proxy node to a terminal used by the user and is displayed on the terminal. For example, the prompt information may be a push message that is sent by the domain master node or the proxy node to the terminal used by the user and that is displayed on the terminal. An application program used by the user to perform the authorization operation is installed on the terminal, and the authorization operation received by the receiving unit is triggered by performing an operation by the user on the application program.

In this way, the user may perform a one-click authorization operation on the domain master node or the used terminal according to the prompt information, and does not need to perform a dual node/point operation on another home network device that accesses a home network and the domain master node. The operation is simple and convenient, and the home network device can quickly access the home network.

In a possible design, the receiving unit is further configured to receive a notification message sent by a home network device, where the notification message is used to notify that there is a home network device that needs to join the domain for pairing. The sending unit sends the prompt information to the user in the following manner: sending the prompt information to the user based on the notification message.

The notification message received by the receiving unit includes an identifier of the home network device that sends the notification message. The indication information sent by the sending unit includes the identifier of the home network device that sends the notification message.

In this embodiment of this application, the notification message includes the identifier of the home network device that sends the notification message, and the indication information also includes the identifier of the home network device that sends the notification message, so that the home network device corresponding to the identifier can access the home network. In this way, another home network device is prevented from accessing the home network, thereby improving security.

The network secure admission apparatus provided in the third aspect of the embodiments of this application may be a domain master node, or may be a chip in a domain master node. The domain master node or the chip has functions of implementing the network secure admission method performed in the first aspect or any one of the possible designs of the first aspect. The functions may be implemented by hardware, or may be implemented by hardware executing corresponding software. The hardware or the software includes one or more units corresponding to the foregoing functions.

The domain master node includes a sending unit, a receiving unit, and a processing unit. The sending unit may be a transmitter, the receiving unit may be a receiver, and the receiver and the transmitter may include a radio frequency circuit. The processing unit may be, for example, a processor. Optionally, the domain master node may further include a storage unit. The storage unit may be, for example, a memory. When the domain master node includes a storage unit, the storage unit is configured to store a computer-executable instruction. The processing unit is connected to the storage unit, and the processing unit executes the computer-executable instruction stored in the storage unit, so that the domain master node performs the network secure admission method in the first aspect or any one of the possible designs of the first aspect.

The chip includes a sending unit, a receiving unit, and a processing unit. The sending unit and the receiving unit may be an input/output interface, a pin, a circuit, or the like on the chip. The processing unit may be, for example, a processor. Optionally, the chip further includes a storage unit. The storage unit may be, for example, a memory. The processing unit may execute a computer-executable instruction stored in the storage unit, so that the chip performs the network secure admission method in the first aspect or any one of the possible designs of the first aspect.

According to a fourth aspect, a network secure admission apparatus is provided. The network secure admission apparatus has functions of implementing the network secure admission method performed by the home network device that needs to join a domain for paring in the second aspect or any one of the possible designs of the second aspect. The functions may be implemented by hardware, or may be implemented by hardware executing corresponding software. The hardware or the software includes one or more units corresponding to the foregoing functions.

In a possible design, the network secure admission apparatus includes a processing unit and a sending unit. The processing unit is configured to determine that the home network device needs to join a domain for paring. The sending unit is configured to send a notification message to a domain master node, where the notification message is used to notify the domain master node that there is a home network device that needs to join the domain for pairing.

When detecting that the home network device is powered on or that there is a new domain, the processing unit determines that the home network device needs to join the domain for pairing.

Optionally, the home network device that needs to join the domain for pairing may further include a storage unit. The storage unit may be, for example, a memory. When the home network device includes a storage unit, the storage unit is configured to store a computer-executable instruction. The processing unit is connected to the storage unit, and the processing unit executes the computer-executable instruction stored in the storage unit, so that the home network device that needs to join the domain for pairing performs the network secure admission method in the second aspect or any one of the possible designs of the second aspect.

In another possible design, the network secure admission apparatus includes a receiving unit, a processing unit, and a sending unit. The receiving unit is configured to receive domain name configuration information of a domain master node that is sent by the domain master node. The processing unit is configured to use a domain name included in the domain name configuration information of the domain master node that is received by the receiving unit as a domain name of the home network device. The sending unit is configured to send a domain name configuration acknowledgment message to the domain master node.

Optionally, the network secure admission apparatus may further include a storage unit. The storage unit may be, for example, a memory. When the network secure admission apparatus includes a storage unit, the storage unit is configured to store a computer-executable instruction. The processing unit is connected to the storage unit, and the processing unit executes the computer-executable instruction stored in the storage unit, so that the home network device performs the network secure admission method in the second aspect or any one of the possible designs of the second aspect.

The network secure admission apparatus provided in the fourth aspect of the embodiments of this application may be a home network device that needs to join a domain for pairing, or may be a chip in a home network device that needs to join a domain for pairing. The home network device or the chip has functions of implementing the network secure admission method performed in the second aspect or any one of the possible designs of the second aspect. The functions may be implemented by hardware, or may be implemented by hardware executing corresponding software. The hardware or the software includes one or more units corresponding to the foregoing functions.

In the network secure admission apparatus provided in the fourth aspect, the sending unit may be a transmitter, the receiving unit may be a receiver, and the receiver and the transmitter may include a radio frequency circuit. The processing unit may be, for example, a processor. The storage unit may be, for example, a memory.

The chip includes a processing unit and a sending unit, and may also include a receiving unit. The sending unit and the receiving unit may be an input/output interface, a pin, a circuit, or the like on the chip. The processing unit may be, for example, a processor. Optionally, the chip further includes a storage unit. The storage unit may be, for example, a memory.

Optionally, the storage unit included in the chip in the third aspect and the fourth aspect may be a storage unit (for example, a register or a cache) in the chip; or the storage unit may be a storage unit (for example, a read-only memory) that is located outside the chip, another type of static storage device (for example, a random access memory) that can store static information and an instruction, or the like.

Optionally, the processor in the third aspect and the fourth aspect may be a central processing unit, a microprocessor, or an application-specific integrated circuit, or may be one or more integrated circuits configured to control to execute a program for performing the network secure admission method in the foregoing aspects or the designs of the foregoing aspects.

According to a fifth aspect, an embodiment of this application provides a computer-readable storage medium. The computer-readable storage medium stores a computer instruction. When the instruction is run on a computer, the network secure admission method performed in the foregoing aspects or any one of the possible designs of the foregoing aspects may be completed.

According to a sixth aspect, an embodiment of this application provides a computer program product. The computer program product includes a computer program, and the computer program is used to perform the network secure admission method in the foregoing aspects or any one of the possible designs of the foregoing aspects.

According to the network secure admission method and apparatus, the domain master node, and the home network device that are provided in the embodiments of this application, the authorization operation of the user is used to trigger the domain master node to enable the pairing window, so that a new device is authorized, before the domain master node enables the pairing window, to join the domain, thereby avoiding a case in which there is a new device that is unauthorized, after the pairing window is enabled, to join the domain, avoiding resource waste, and improving security of secure admission. In addition, the user only needs to perform a simple authorization operation according to the prompt information sent by the domain master node, so that the home network device can automatically access the home network, and perform data transmission. The operation is convenient and simple.

### BRIEF DESCRIPTION OF DRAWINGS

FIG. 1 shows a domain network architecture according to an embodiment of this application;
FIG. 2 is a schematic diagram of a secure admission process of a home network device according to an embodiment of this application;
FIG. 3 is a schematic diagram of a home power line network architecture according to an embodiment of this application;
FIG. 4A is a flowchart of a secure admission method for a home network device according to an embodiment of this application;
FIG. 4B is a flowchart of another secure admission method for a home network device according to an embodiment of this application;
FIG. 5A is a flowchart of still another secure admission method for a home network device according to an embodiment of this application;
FIG. 5B is a flowchart of yet another secure admission method for a home network device according to an embodiment of this application;
FIG. 6A is a flowchart of still yet another secure admission method for a home network device according to an embodiment of this application;
FIG. 6B is a flowchart of a further secure admission method for a home network device according to an embodiment of this application;
FIG. 7 is a schematic structural diagram of a network secure admission apparatus according to an embodiment of this application;
FIG. 8 is a schematic structural diagram of a home network device according to an embodiment of this application;
FIG. 9 is a schematic structural diagram of another network secure admission apparatus according to an embodiment of this application;
FIG. 10 is a schematic structural diagram of another home network device according to an embodiment of this application;
FIG. 11 is a schematic structural diagram of still another network secure admission apparatus according to an embodiment of this application;
FIG. 12 is a schematic structural diagram of still another home network device according to an embodiment of this application;
FIG. 13 is a schematic structural diagram of still yet another network secure admission apparatus according to an embodiment of this application; and
FIG. 14 is a schematic structural diagram of still yet another home network device according to an embodiment of this application.

### DESCRIPTION OF EMBODIMENTS

The following describes technical solutions of embodiments in this application with reference to the accompanying drawings.

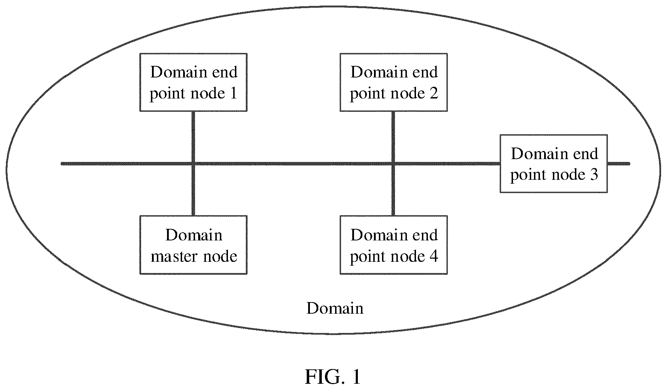

First, some terms in the embodiments of this application are explained for ease of understanding.
(1) A home network device may be understood as a device that performs communication by using a home network medium. The home network device may also be referred to as a communications node or a terminal node. The home network medium may be, for example, a coaxial cable, a twisted pair, a power line, or a plastic optical fiber. Currently, some examples of the home network device are as follows: a terminal integrating a home network chip, for example, a digital subscriber line modem (DSL modem), an optical network terminal (optical network terminal, ONT), or a home router, where such a terminal device may be connected to the internet upwards, and connected to a user terminal downwards by using a home network; a wireless (wireless) or a wired access point (access point, AP); a power line communications device that may be used in an industrial application scenario, including a smart meter or the like; and various internet of things (internet of things, IoT) devices and the like that access the home network upwards by using the foregoing home network medium and that are connected to various terminals, or that are terminal devices.
(2) The domain may be understood as a communications network including a plurality of home network devices, and one domain may include a plurality of home network devices that perform communication by using a home network medium. For example, in FIG. 1, a domain master node and a domain end point node 1 to a domain end point node 4 establish a domain.
   Intra-domain communication may be encrypted or non-encrypted, and corresponding domains may include a security domain and a non-security domain. In the security domain, home network devices communicate with each other in an encryption mode. In the non-security domain, home network devices communicate with each other in a non-encryption mode.
(3) A domain master node may be referred to as DM. A domain master node may be understood as a home network node that has a management and control function in a domain. The domain master node may interact with a home network device located outside the domain, to enable the home network device located outside the domain to join the domain.
(4) A domain end point node may be referred to as EP node. An EP node may be understood as a home network node other than the domain master node in the domain.
   In the embodiments of this application, a home network device may perform role switching between a domain master node and a domain end point node.
(5) A secure admission may be understood as a process in which a home network device joins a domain for pairing networking. The pairing networking may be understood as a process of establishing a private network between home network devices.
(6) A pairing window refers to a time window that allows a home network device to perform pairing networking (secure admission).

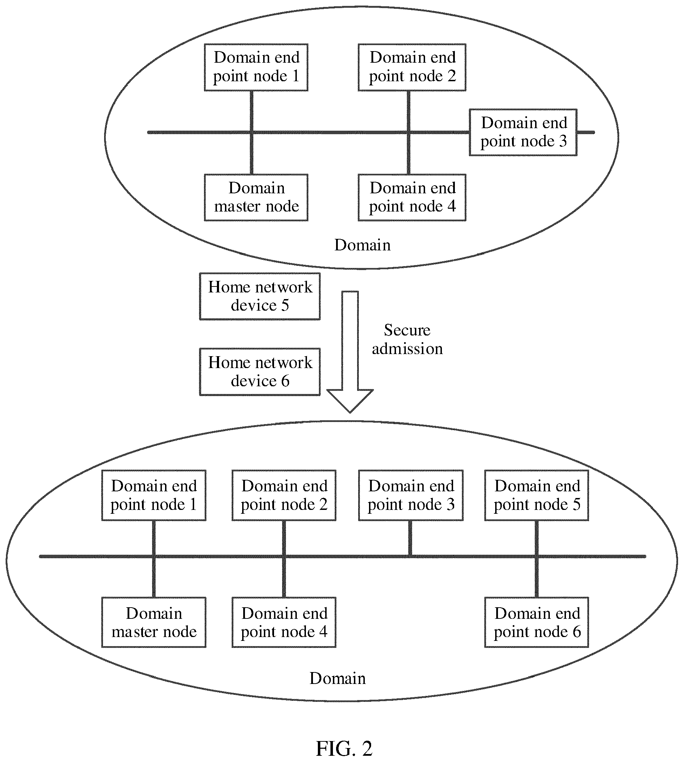

Currently, security of communication between home network devices is ensured in a secure admission (Secure admission) manner. For example, in FIG. 2, a domain master node and a domain end point node 1 to a domain end point node 4 establish a domain. The domain master node and the domain end point node 1 to the domain end point node 4 may perform secure communication in the domain by using a home network medium. If needing to perform secure communication, a home network device 5 and a home network device 6 that are located outside the domain need to perform a secure admission process to join the domain. In all existing secure admission methods for a home network device, a user needs to perform an operation on a paired home network device, to trigger a domain master node to enable a pairing window. In addition, the user needs to determine, after the domain master node enables the pairing window, whether to authorize a new home network device to join a domain. After the pairing window is enabled, if the user cannot authorize, within preset duration of the pairing window, a new node to join the domain, resource waste may be caused, and a malicious device may illegally join the domain, resulting in comparatively low security.

In view of this, an embodiment of this application provides a secure admission method. The secure admission method may be applied to a home network in which communication is performed by using a home network medium, and certainly, may also be applied to a field that also focuses on a security problem in addition to a home network field. For example, the secure admission method may also be applied to fields such as enterprise communication, industrial interworking interconnection, and the internet of things. In application in these fields, when determining that there is a home network device that needs to join a domain for pairing, a home network device used as a domain master node sends prompt information to a user. The user performs an authorization operation according to the prompt information sent by the domain master node. The domain master node receives the authorization operation of the user, enables a pairing window when determining that the authorization operation of the user is received, and sends, within an effective period of the pairing window, indication information used to indicate that the device is allowed to join the domain for pairing. After receiving the indication information sent by the domain master node, the home network device that needs to join the domain for pairing (or which may be understood as a home network device used as a domain end point node) may initiate a registration request, to complete a secure admission process. According to this embodiment of this application, the user performs the authorization operation according to the prompt information, and the user does not need to use a device such as a television or a computer to cooperate the operation, so that paring networking of a home network is friendlier to the user, and an operation is more convenient. In addition, the authorization operation of the user is used to trigger the domain master node to enable the pairing window, so that a new device is authorized, before the domain master node enables the pairing window, to join the domain, thereby avoiding a case in which there is a new device that is unauthorized, after the pairing window is enabled, to join the domain, avoiding resource waste, and improving security of secure admission (or pairing networking). Moreover, because the user does not need to perform the authorization operation in the pairing window, compared with that in the prior art, the effective period of the pairing window may be set to be comparatively short. This further reduces a possibility of illegal joining of a malicious device, and improves the security of secure admission.

In this embodiment of this application, the domain master node may directly send the prompt information to the user, or a proxy node may send the prompt information to the user. The proxy node may be any domain end point node. In a possible implementation, the proxy node, as a user interface device, displays the prompt information to the user. For example, the domain master node instructs the proxy node to provide a light flashing prompt to the user. The authorization operation of the user may be that the user performs a key pressing operation directly on the domain master node, or the user performs a key pressing operation on the proxy node and the proxy node notifies the domain master node of the key pressing authorization operation of the user. Alternatively, the domain master node may directly send a push message to a terminal used by the user, or instruct the proxy node to send a push message to a terminal used by the user, where the authorization operation of the user may alternatively be a one-click authorization operation performed by the user on an application program installed on the used terminal.

The secure admission method provided in this embodiment of this application may be applied to a home power line network. The power line network may also be referred to as power line communication (PLC), and means that data or information is transmitted by using an existing power line according to a digital signal processing method. Power lines widely and naturally cover homes and corridors in residential areas, and therefore, a home power line network has an advantage in application of a home network technology.

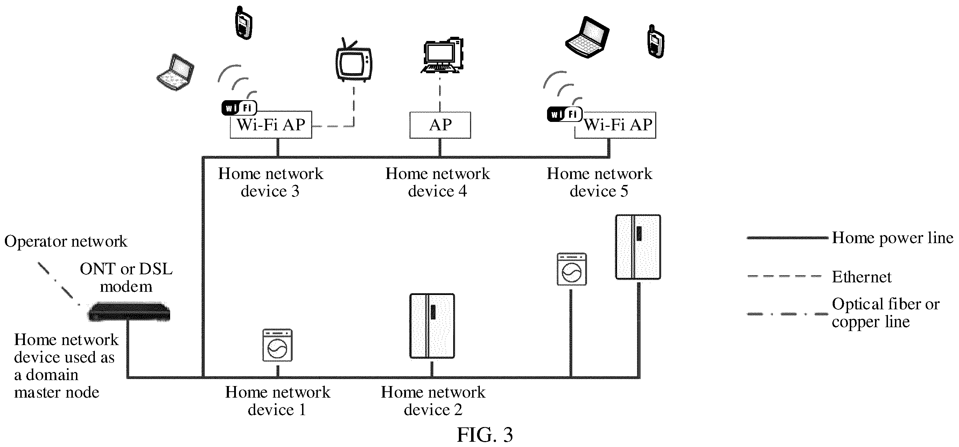

FIG. 3 is a schematic diagram of a home power line network architecture according to an embodiment of this application. In a typical implementation solution, as shown in FIG. 3, a domain master node used as an access device of a home power line network may be located on a terminal device such as an ONT or a DSL modem, and is connected to an operator network by using an optical fiber, a copper line, or the like, and performs uplink data transmission. In this case, the domain master node may be connected to a home network device 1 (a domain end point node 1) to a home network device 5 (a domain end point node 5) by using a medium such as a power line or a coaxial cable. For example, in FIG. 3, home network devices such as a wireless fidelity (wireless fidelity, Wi-Fi) access point (access point, AP), a wired AP, and a smart household appliance may be connected by using a power line, to perform downlink data transmission and manage the home power line network. In this way, the domain master node device may implement cross-network data transmission between the operator network and the home power line network. A home network device such as a power line communication modem or a router may be connected to the domain master node by using a power line, to perform uplink data transmission. The home network device such as the power line communication modem or the router may be used as a domain end point node to access the home power line network; is connected, in a connection mode such as a network cable or wireless fidelity (wireless fidelity, WI-FI), to a terminal, such as a mobile phone, a computer, or a television set, used by a user; and performs downlink data transmission. The home network device used as the domain end point node to access the home power line network may also be understood as a home network device used as a lower-level network distribution node. When a secure admission method provided in this embodiment of this application is applied in the home power line network, when determining that the home network device used as the domain end point node to access the home power line network needs to access the home power line network, the home network device used as the domain end point node to access the home power line network may send a notification message to a home network device used as the domain master node, where the notification message is used to notify that there is a home network device used as the domain end point node to access the home power line network. When receiving the notification message from the home network device used as the domain end point node, the home network device node used as the domain master node may send prompt information to the user, where the prompt information is used to prompt that there is a home network device used as the domain end point node to access the home power line network. After the user receives the prompt information, if the home network device is allowed to join the home power line network, the user may perform an authorization operation. When receiving the authorization operation of the user, the domain master node may enable a pairing window, and send indication information within an effective period of the pairing window, to indicate that the home network device is allowed to access the home power line network. Correspondingly, the domain master node used as a management node of the home network may alternatively be located on another terminal device such as a Wi-Fi AP device. In this case, the ONT, the DSL modem, or the like may be used as a domain end point node to access the home network downwards, is connected to another home network device by using a medium such as a power line or a coaxial cable, and is connected to the operator network upwards by using an optical fiber, a copper line, or the like. Furthermore, the device such as the ONT or the DSL modem is not integrated with a home network chip function, but is directly connected to a separated home network device, and in this case, the home network device is connected to another home network device by using a medium such as a power line or a coaxial cable. In this case, the domain master node may be located on any home network device to perform functions such as management and resource allocation. It should be noted that the foregoing secure admission methods are all applicable to applications in these scenarios, to ensure access and communication security in the home network.

In this embodiment of this application, the home network device accesses the home power line network in the foregoing manner. The user only needs to perform a simple authorization operation according to the prompt information sent by the domain master node, so that the home network device can automatically access the home power line network, and perform data transmission. The operation is convenient and simple.

In this embodiment of this application, an example in which the secure admission method is applied to the home power line network is used for description in the following.

It may be understood that, in the home power line network, the home network device in this embodiment of this application may also be referred to as a power line communications device. If the secure admission method is applied to a network other than a home network, a corresponding name may be changed correspondingly.

Further, it may be understood that "joining a domain for paring" and "accessing a home power line network" in the embodiments of this application may be interchangeably used sometimes. It should be noted that expressed meanings are consistent when differences are not emphasized.

Further, a home network device in the following in the embodiments of this application is a home network device located outside a domain, or may be understood as a home network device that needs to join a domain for paring, or may be understood as a home network device used as a domain end point node or a lower-level network distribution node to access a home network.

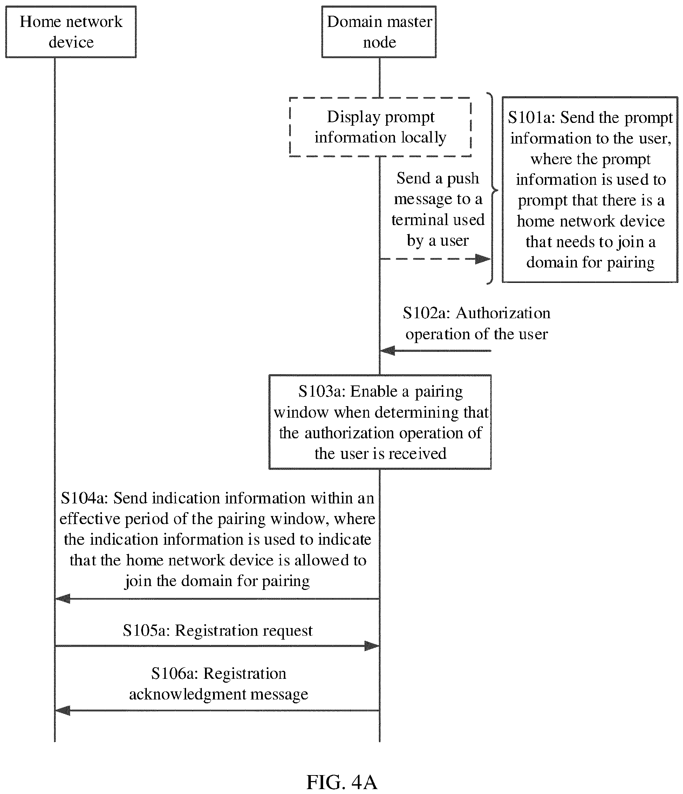

FIG. 4A is a flowchart of a secure admission method for a home network device according to an embodiment of this application. Referring to FIG. 4A, the method includes the following steps.

S101a: A domain master node sends prompt information to a user, where the prompt information is used to prompt that there is a home network device that needs to join a domain for pairing.

In a possible example, in this embodiment of this application, the prompt information sent by the domain master node to the user may be prompt information displayed on the domain master node locally. For example, the prompt information may be a light flashing prompt on the domain master node. The domain master node prompts, by flashing light, the user that there is a home network device that needs to join the domain for pairing.

In another possible example, in this embodiment of this application, the prompt information sent by the domain master node to the user may be a push message, and the domain master node sends the push message to a terminal used by the user. After receiving the push message sent by the domain master node, the terminal may display the push message on the terminal, so as to prompt the user that there is a home network device that needs to join the domain for pairing. The push message may be implemented by using an application program (APP) of a smartphone.

S 102a: The user performs an authorization operation according to the prompt information sent by the domain master node to the user, where the authorization operation is used to indicate that the home network device is allowed to join the domain to perform a pairing operation. The domain master node receives the authorization operation of the user.

Specifically, in this embodiment of this application, the authorization operation performed by the user may be implemented in different forms based on different pieces of prompt information. For example, if the prompt information is prompt information displayed on the domain master node locally, the authorization operation may be an operation performed by the user on the master node. The operation performed by the user on the master node may be, for example, a key pressing operation, or certainly, may be performed in another manner. In this way, the user may perform the authorization operation on the domain master node according to the prompt information, and does not need to perform a dual node/point operation on another home network device that accesses a home power line network and the domain master node. The operation is simple and convenient, and the home network device can quickly access the home power line network.

For another example, if the prompt information is a push message that is sent by the domain master node to the terminal and that is displayed on the terminal, and an application program (APP) used by the user to perform the authorization operation is installed on the terminal used by the user, the authorization operation of the user may be triggered by performing an operation by the user on the APP installed on the terminal, for example, may be a one-click authorization operation performed on the APP, or certainly, may be performed in another operation manner. In this way, the user may perform a one-click authorization operation on the used terminal according to the prompt information, and does not need to perform a dual node/point operation on another home network device that accesses the home power line network and the domain master node. The operation is simple and convenient, and the home network device can quickly access the home power line network.

S103a: The domain master node enables a pairing window when determining that the authorization operation of the user is received.

S 104a: The domain master node sends indication information within an effective period of the pairing window, where the indication information is used to indicate that the home network device is allowed to join the domain for pairing.

In this embodiment of this application, the indication information sent by the domain master node may be a MAP message.

S 105a: The home network device receives the indication information sent by the domain master node, and sends a registration request to the domain master node.

S 106a: The domain master node receives the registration request sent by the home network device, and replies to the home network device with a registration acknowledgment message, to implement a secure admission process of the home network device.

Specifically, in this embodiment of this application, the registration acknowledgment message with which the domain master node replies to the home network device may carry a key message, to implement communication between the home network device and the domain master node in a security domain.

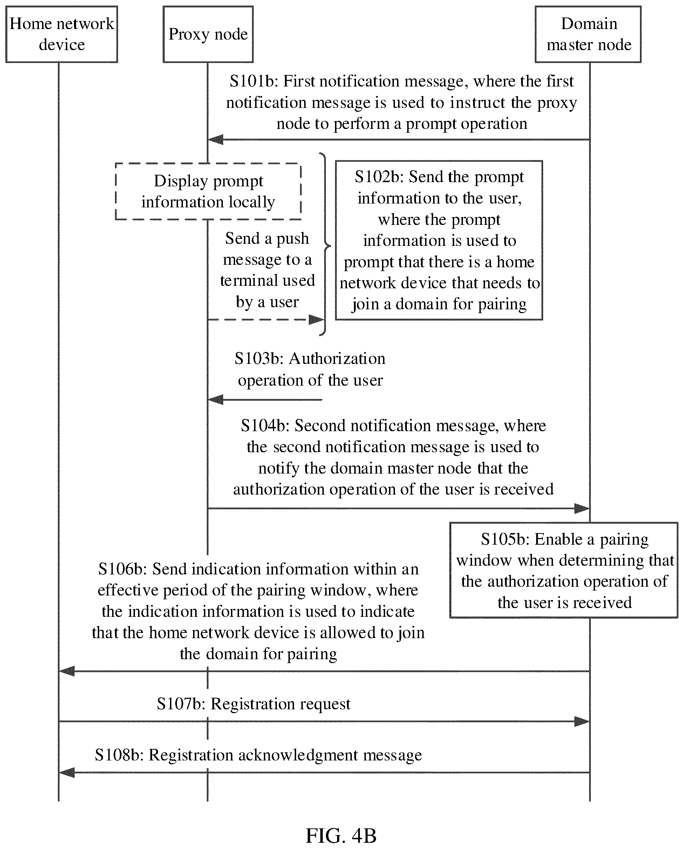

In this embodiment of this application, that the domain master node sends the prompt information to the user may be implemented in the foregoing manner in which the domain master node directly sends the prompt information to the user, or may be implemented in a manner in which the prompt information is indirectly sent to the user by using a proxy node. FIG. 4B is a flowchart of implementation of indirectly sending prompt information to a user by using a proxy node according to an embodiment of this application. Referring to FIG. 4B, the method includes the following steps.

S 101b: A domain master node sends a first notification message to the proxy node, where the first notification message is used to instruct the proxy node to perform a prompt operation.

S102b: The proxy node receives the first notification message sent by the domain master node, and sends the prompt information to the user.

An implementation process in which the proxy node sends the prompt information to the user in this embodiment of this application is similar to an implementation process in which the domain master node sends the prompt information to the user, and the prompt information may be displayed locally, or may be sent to a terminal used by the user and may be displayed on the terminal used by the user. For a specific implementation process, refer to the implementation process in which the domain master node sends the prompt information to the user in the foregoing embodiment. Details are not described herein.

S 103b: The proxy node receives an authorization operation of the user.

After the user obtains the prompt information sent by the proxy node, the user performs the authorization operation according to the prompt information. A specific authorization operation may be a key pressing operation performed by the user on the proxy node. Alternatively, the authorization operation of the user may be a one-click authorization operation performed by the user on an application program installed on the used terminal. For a related description of the authorization operation, refer to an implementation process of performing the authorization operation according to the prompt information sent by the domain master node in the foregoing embodiment. Details are not described herein.

S 104b: The proxy node sends a second notification message to the domain master node, where the second notification message is used to notify the domain master node that the authorization operation of the user has been received.

In this embodiment of this application, after receiving the authorization operation of the user, the proxy node may send the second notification message to the domain master node, to notify the domain master node that the user has performed the authorization operation. For example, the proxy node notifies the domain master node of the key pressing authorization operation of the user or the one-click authorization operation performed by the user on the application program installed on the used terminal.

Processes of performing S 105b, S 106b, S 107b, and S 108b are similar to processes of performing S 103a, S 104a, S 105a, and S 106a in the foregoing embodiment. Details are not described herein in this embodiment of this application.

According to the network secure admission method provided in this embodiment of this application, the user performs, according to the prompt information of the domain master node, the authorization operation on the home network device that needs to join the domain for paring, and the domain master node enables a pairing window after receiving the authorization operation of the user, so that the home network device is authorized, before the domain master node enables the pairing window, to join the domain, thereby avoiding a case in which there is no home network device that is authorized, after the pairing window is enabled, to join the domain, and avoiding resource waste. Moreover, because the user does not need to perform the authorization operation in the pairing window, compared with that in the prior art, the effective period of the pairing window may be set to be comparatively short. This may reduce a possibility of illegal joining of a malicious device to some extent, and improves security of secure admission.

In a possible implementation in this embodiment of this application, when there is a home network device that needs to join the domain for pairing, the home network device that needs to join the domain for pairing may send a notification message to the domain master node, to notify that there is a home network device that needs to be paired. After receiving the notification message sent by the home network device, the domain master node determines prompt information, to prompt the user that there is a home network device that needs to join the domain for pairing.

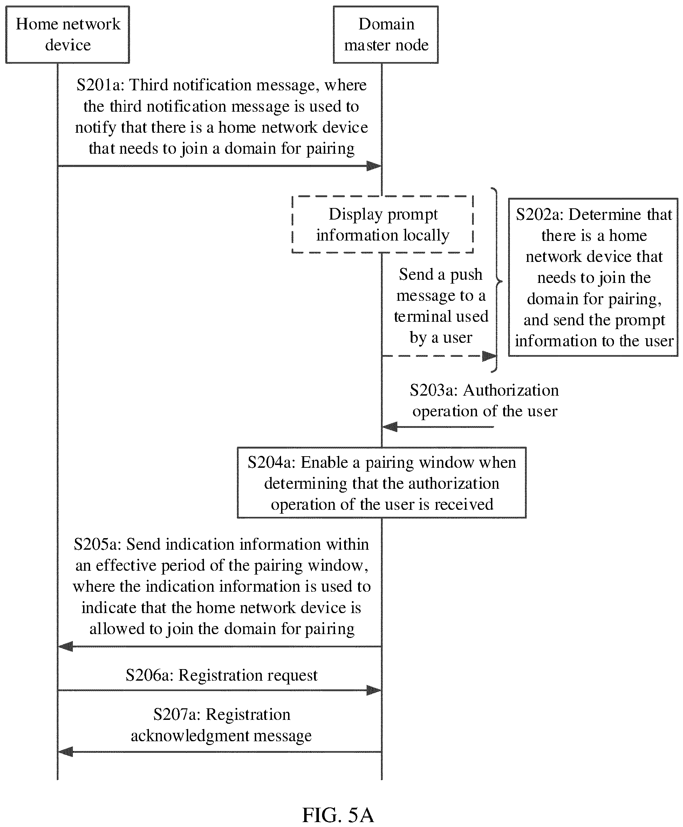

FIG. 5A is a flowchart of implementation of a secure admission method for a home network device according to an embodiment of this application. Referring to FIG. 5A, the method includes the following steps.

S201a: The home network device sends a third notification message to a domain master node, where the third notification message is used to notify that there is a home network device that needs to join a domain for pairing.

Specifically, in this embodiment of this application, when the home network device is allowed to be used as a domain end point node to access a home network, the home network device may send the notification message to a home network device used as the domain master node. For example, the home network device may send the third notification message to the domain master node after the home network device is powered on, or the home network device may send the third notification message to the domain master node when the home network device detects that there is a newly established domain in the network. In a possible example, in this embodiment of this application, the third notification message sent by the home network device to the domain master node may also be referred to as node presence information (ADM_NodePresence.ind). A specific form of the third notification message is not limited in this embodiment of this application.

In a possible example, the third notification message sent by the home network device to the domain master node may include an identifier of the home network device, so that the domain master node determines, by using the identifier, the home network device that needs to join the domain for pairing.

S202a: The domain master node receives the third notification message sent by the home network device, determines that there is a home network device that needs to join the domain for pairing (there is a home network device that is allowed to be used as the domain end point node to access the home network), and displays prompt information locally or sends prompt information to a terminal used by a user, to prompt the user that there is a home network device that needs to join the domain for pairing.

In a possible example, if the domain master node prompts, in a manner of sending the prompt information to the terminal used by the user, the user that there is a home network device that needs to join the domain for pairing, the prompt information may further include an identifier of the home network device, so that the user may determine, by using the identifier, the home network device that needs to join the domain for pairing, to determine whether to authorize the home network device corresponding to the identifier.

In another possible example, after receiving the third notification message sent by the home network device, the domain master node may determine whether the home network device that needs to join the domain for pairing belongs to a home network of the domain master node, and send the prompt information to the user on the premise of determining that the home network device belongs to the home network of the domain master node. For example, signal strength (certainly, which may alternatively be other information) of the home network device that sends the third notification message may be detected, and whether the home network device that sends the third notification message belongs to the home network of the domain master node is determined based on the signal strength. For example, if the signal strength is less than a specified threshold, it may be determined that the home network device that sends the third notification message does not belong to the home network of the domain master node and may belong to a neighboring home network. In this case, the prompt information may not be sent to the user, to intelligently avoid a case of false reporting.

Processes of performing S203a, S204a, S205a, S206a, and S207a are similar to processes of performing S 102a, S103a, S104a, S105a, and S 106a. Details are not described herein in this embodiment of this application.

It should be emphatically noted that, in this embodiment of this application, indication information sent by the domain master node to the home network device may include the identifier of the home network device, to implement secure admission for the home network device corresponding to the identifier.

According to the method for implementing secure admission for a home network device provided in this embodiment of this application, the home network device that needs to join the domain for pairing sends the third notification message to the domain master node, to notify the domain master node that there is a home network device that needs to join the domain for pairing, and the user does not need to perform an operation on a home network device located in the domain, so that an execution process of secure admission can be simplified, and efficiency of the secure admission can be increased.

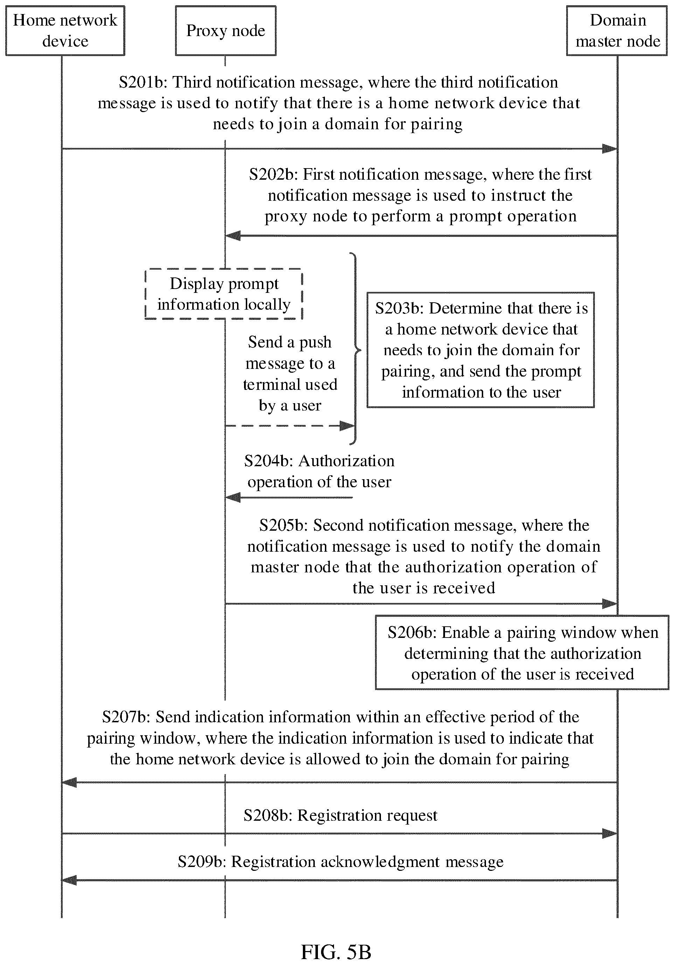

In a possible implementation, after receiving the third notification message, the domain master node may send a first notification message to a proxy node, to instruct, by using the first notification message, the proxy node to perform a prompt operation. After receiving the first notification message, the proxy node sends prompt information to the user, and receives an authorization operation that is performed by the user according to the prompt information sent by the proxy node. The proxy node sends a second notification message to the domain master node, to notify the domain master node that the user has sent the authorization operation. After receiving the second notification message sent by the proxy node, the domain master node may enable a pairing window, and perform a secure admission execution process. For a specific implementation process, refer to FIG. 5B. A process of performing S201b in FIG. 5B is similar to a process of performing S201a in FIG. 5A, processes of performing S202b, S203b, S204b, S205b, S206b, S207b, S208b, and S209b are the same as processes of performing S 101b, S 102b, S 103b, S 104b, S 105b, S 106b, S 107b, and S 108b in FIG. 4B, and details are not described herein.

A domain name needs to be configured in an execution process of secure admission for the home network device. However, the domain name is usually preconfigured. This manner has comparatively poor flexibility. In view of this, an embodiment of this application provides a domain name configuration method in a secure admission process of a home network device. In the domain name configuration method, a domain master node may send domain name configuration information of the domain master node after receiving an authorization operation of a user; and the home network device may receive the domain name configuration information sent by the domain master node, use a domain name included in the domain name configuration information of the domain master node as a domain name of the home network device, and send a domain name configuration acknowledgment message to the domain master node, to indicate, by using the domain name configuration acknowledgment message, that the home network device uses the domain name included in the domain name configuration information of the domain master node as the domain name of the home network device. In this way, the home network device can perform domain name configuration based on the domain name configuration information of the domain master node. Compared with a preconfiguration manner, this manner enables the domain name configuration of the home network device to be more flexible.

In a possible implementation, in this embodiment of this application, a home network device that needs to join a domain for pairing may also send a notification message to the domain master node, to prompt, by using the notification message, that there is a home network device that needs to join the domain for pairing. Before receiving the authorization operation of the user, the domain master node receives the notification message sent by the home network device, and then determines a prompt message based on the notification message. Specifically, the notification message may include an identifier of the home network device.

Prompt information used in a domain name configuration implementation process in this embodiment of this application is similar to the notification message in the foregoing embodiment. Therefore, for a related explanation of the notification message, refer to the description in the foregoing embodiment. Details are not described herein.

The authorization operation of the user may be performed according to prompt information sent by the domain master node to the user, and the prompt information is used to prompt that there is a home network device that needs to join the domain for pairing. The prompt information used in the domain name configuration implementation process in this embodiment of this application is similar to the prompt information in the foregoing embodiment. Therefore, for a related explanation of the prompt information, refer to the description in the foregoing embodiment. Details are not described herein.

In this embodiment of this application, after completing the domain name configuration for the home network device, the domain master node may enable a pairing window, and send indication information within an effective period of the pairing window, where the indication information is used to indicate that the home network device is allowed to join the domain for pairing.

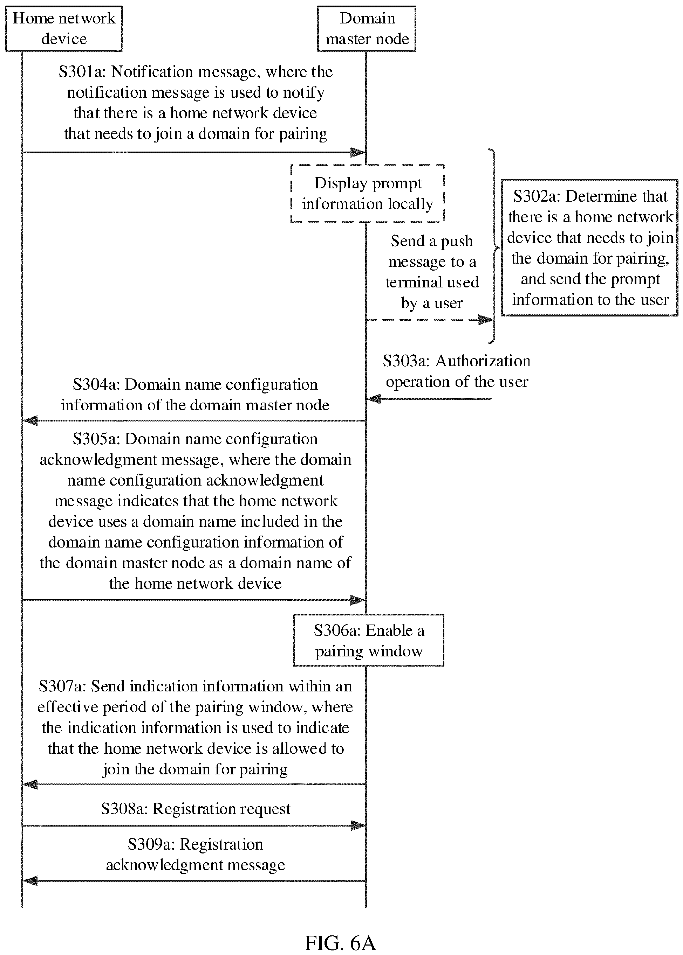

FIG. 6A is a flowchart of implementation of another secure admission method for a home network device according to an embodiment of this application.

In the method shown in FIG. 6A, processes of performing S301a, S302a, and S303a are the same as the processes of performing S201a, S202a, and S203a, and details are not described herein.

S304a: The domain master node receives the authorization operation of the user, and sends domain name configuration information of the domain master node to the home network device. The domain name configuration information includes a domain name of a domain in which the domain master node is located.

S305a: The home network device receives the domain name configuration information sent by the domain master node, uses the domain name included in the domain name configuration information as a domain name of the home network device, and sends a domain name configuration acknowledgment message to the domain master node. The domain name configuration acknowledgment message is used to indicate that the home network device uses the domain name included in the domain name configuration information of the domain master node as the domain name of the home network device.

In this embodiment of this application, that the home network device uses the domain name included in the domain name configuration information as the domain name of the home network device may be: directly using the domain name included in the domain name configuration information as the domain name of the home network device; or may be: adding the domain name included in the domain name configuration information to a configured domain name list, and subsequently, selecting the domain name included in the domain name configuration information from the domain name list as the domain name of the home network device.

S306a: The domain master node receives the domain name configuration acknowledgment message sent by the home network device, and enables a pairing window.

Processes of performing S307a, S308a, and S309a are similar to the processes of performing S 104a, S 105a, and S 106a. Details are not described herein in this embodiment of this application.

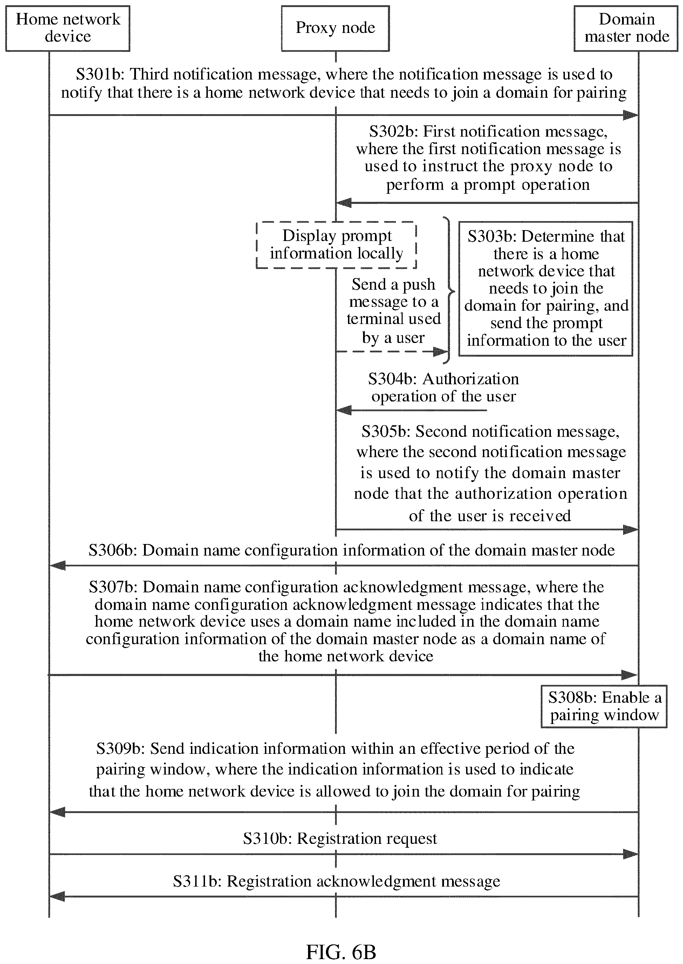

In a possible implementation, after receiving the third notification message, the domain master node may send a first notification message to a proxy node, to instruct, by using the first notification message, the proxy node to perform a prompt operation. After receiving the first notification message, the proxy node sends prompt information to the user, and receives an authorization operation that is performed by the user according to the prompt information sent by the proxy node. The proxy node sends a second notification message to the domain master node, to notify the domain master node that the user has sent the authorization operation. After receiving the second notification message sent by the proxy node, the domain master node may send domain name configuration information to the home network device that needs to join the domain for pairing, and perform an execution process of secure admission. For a specific implementation process, refer to FIG. 6B. Processes of performing S301b, S302b, S303b, S304b, and S305b in FIG. 6B are the same as processes of performing S201b, S202b, S203b, S204b, and S205b, processes of performing S306b, S307b, S308b, S309b, S310b, and S311b are the same as processes of performing S304a, S305a, S306a, S307a, S308a, and S309a, and details are not described herein.

It should be noted that, in the specification, claims, and accompanying drawings of the embodiments of this application, the terms "first", "second", "third", and so on are intended to distinguish between similar objects but do not necessarily indicate a specific order or sequence, for example, the first notification message, the second notification message, and the third notification message in the embodiments of this application are used only for ease of description and distinguishing between different notification messages, and do not constitute a limitation on the notification messages. It should be understood that the data used in such a way are interchangeable in proper circumstances so that the embodiments of this application described herein can be implemented in other orders than the order illustrated or described herein.

The foregoing mainly describes the solutions provided in the embodiments of this application from a perspective of interaction between the domain master node and the home network device. It may be understood that, to implement the foregoing functions, the domain master node and the home network device include corresponding hardware structures and/or software modules for performing the functions. With reference to examples of units (devices and components) and algorithm steps described in the embodiments disclosed in this application, the embodiments of this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation falls beyond the scope of the technical solutions in the embodiments of this application.

In the embodiments of this application, functional unit (device or component) division may be performed on the domain master node and the home network device based on the foregoing method examples. For example, each functional unit (device or component) may be divided corresponding to each function, or at least two of the foregoing functions may be integrated into one processing unit (device or component). The integrated unit (device or component) may be implemented in a form of hardware, or may be implemented in a form of a software functional unit (device or component). It should be noted that the unit (device or component) division in the embodiments of this application is an example, and is merely logical function division. There may be another division manner in actual implementation.

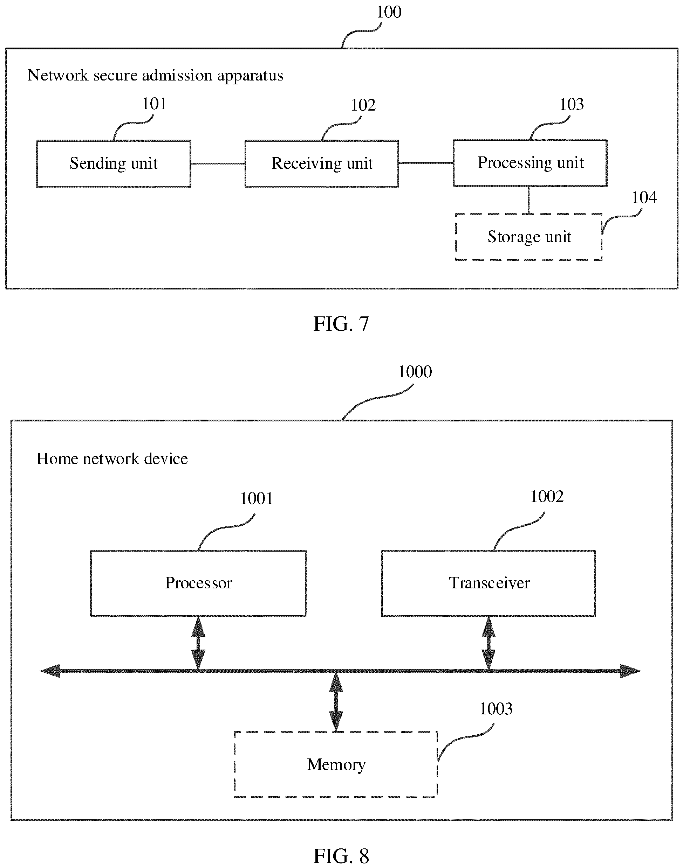

When an integrated unit (device or component) is used, FIG. 7 is a schematic structural diagram of a network secure admission apparatus 100 according to an embodiment of this application. The network secure admission apparatus 100 may be a domain master node, or may be a component in a domain master node. Referring to FIG. 7, the network secure admission apparatus 100 includes a sending unit 101, a receiving unit 102, and a processing unit 103.

The sending unit 101 is configured to send prompt information to a user, where the prompt information is used to prompt that there is a home network device that needs to join a domain for pairing. The receiving unit 102 is configured to receive an authorization operation of the user, where the authorization operation is performed by the user according to the prompt information sent by the sending unit 101, and the authorization operation is used to indicate that the home network device is allowed to join the domain to perform a pairing operation. The processing unit 103 enables a pairing window when determining that the receiving unit 102 receives the authorization operation of the user, and sends indication information within an effective period of the pairing window, where the indication information is used to indicate that the home network device is allowed to join the domain for pairing.

In a possible example, the prompt information sent by the sending unit 101 may be prompt information displayed on the domain master node locally or may be prompt information displayed on a proxy node; and the authorization operation received by the receiving unit 102 may be an operation performed by the user on the domain master node or the proxy node. For example, the prompt information displayed on the domain master node locally or the prompt information displayed on the proxy node is a light flashing prompt, the operation performed by the user on the master node may be a key pressing operation, and the key pressing operation may be understood as a one-click authorization operation.

According to this embodiment of this application, the user performs the one-click authorization operation according to the prompt information, and the user does not need to use a device such as a television or a computer to cooperate the operation, so that paring networking of a home network is friendlier to the user, and an operation is more convenient. In addition, the authorization operation of the user is used to trigger the domain master node to enable the pairing window, so that a new device is authorized, before the domain master node enables the pairing window, to join the domain, thereby avoiding a case in which there is a new device that is unauthorized, after the pairing window is enabled, to join the domain, avoiding resource waste, and improving security of secure admission (or pairing networking). Moreover, because the user does not need to perform the authorization operation in the pairing window, compared with that in the prior art, the effective period of the pairing window may be set to be comparatively short. This further reduces a possibility of illegal joining of a malicious device, and improves the security of secure admission.

In another possible example, the prompt information sent by the sending unit 101 may be prompt information that is sent by the domain master node or a proxy node to a terminal used by the user and that is displayed on the terminal, an application program used by the user to perform the authorization operation is installed on the terminal, and the authorization operation received by the receiving unit may be triggered by performing an operation by the user on the application program. For example, the prompt information that is sent by the domain master node to the terminal used by the user and that is displayed on the terminal may be a push message that is sent by the domain master node to the terminal used by the user and that is displayed on the terminal. The operation performed by the user on the application program installed on the terminal may be a one-click authorization operation.

In a possible design, the receiving unit 102 is further configured to receive a notification message sent by a home network device, where the notification message is used to notify that there is a home network device that needs to join the domain for pairing. The sending unit 101 is configured to send the prompt information to the user based on the notification message received by the receiving unit 102. The notification message received by the receiving unit 102 includes an identifier of the home network device that sends the notification message. The indication information sent by the sending unit 101 also includes the identifier of the home network device that sends the notification message.

In this embodiment of this application, the notification message includes the identifier of the home network device that sends the notification message, and the indication information also includes the identifier of the home network device that sends the notification message, so that the home network device corresponding to the identifier can access the home network. In this way, another home network device is prevented from accessing the home network, thereby improving security.

The network secure admission apparatus 100 may further include a storage unit 104. The storage unit 104 is configured to store a computer-executable instruction. The processing unit 103 is connected to the storage unit 104, and the processing unit 103 executes the computer-executable instruction stored in the storage unit 104, so that the network secure admission apparatus 100 performs the network secure admission method performed by the domain master node in the foregoing method embodiments.

When a hardware form is used for implementation, in this embodiment of this application, the sending unit 101 and the receiving unit 102 may be a communications interface, a transceiver, a transceiver circuit, or the like. The communications interface is a collective term, and may include one or more interfaces. The transceiver circuit may be a radio frequency circuit. The processing unit 103 may be a processor or a controller. The storage unit 104 may be a memory.

When the sending unit 101 and the receiving unit 102 are a transceiver and the processing unit 103 is a processor, the network secure admission apparatus 100 in this embodiment of this application may be a network secure admission apparatus shown in FIG. 8, the network secure admission apparatus shown in FIG. 8 may be applied to a home network device, and the home network device may be a domain master node.

FIG. 8 is a schematic structural diagram of a home network device 1000 according to an embodiment of this application, to be specific, is another possible schematic structural diagram of the network secure admission apparatus 100. Referring to FIG. 8, the home network device 1000 includes a processor 1001 and a transceiver 1002. Alternatively, the processor 1001 may be a controller. The processor 1001 is configured to support the home network device 1000 in performing functions of the domain master node in FIG. 4 and FIG. 5. The transceiver 1002 is configured to support the home network device 1000 in performing functions of sending and receiving a message. The home network device 1000 may further include a memory 1003. The memory 1003 is configured to be coupled to the processor 1001, and store a program instruction and data that are necessary for the home network device 1000. The processor 1001, the transceiver 1002, and the memory 1003 are connected. The memory 1003 is configured to store an instruction. The processor 1001 is configured to execute the instruction stored in the memory 1003, to control the transceiver 1002 to send and receive a signal, and to complete the steps of the corresponding functions performed by the domain master node in the foregoing method.

In this embodiment of this application, for concepts, explanations, detailed descriptions, and other steps that are related to the network secure admission apparatus 100 and the home network device 1000 and related to the technical solutions provided in the embodiments of this application, refer to descriptions about the content in the foregoing method embodiments or other embodiments. Details are not described herein.

When a chip form is used for implementation, the network secure admission apparatus 100 in this embodiment of this application may be applied to a chip in a home network device. The chip has functions of implementing the network secure admission method performed by the domain master node in the foregoing method embodiments. The functions may be implemented by hardware, or may be implemented by hardware executing corresponding software. The hardware or the software includes one or more units corresponding to the foregoing functions. The chip includes a sending unit 101, a receiving unit 102, and a processing unit 103. The sending unit 101 and the receiving unit 102 may be an input/output interface, a pin, a circuit, or the like on the chip. The processing unit 103 may be, for example, a processor. The chip may further include a storage unit 104. The storage unit 104 may be, for example, a memory. The processing unit 103 may execute a computer-executable instruction stored in the storage unit 104, so that the chip performs the network secure admission method performed by the domain master node in the foregoing method embodiments. Optionally, the storage unit 104 may be a storage unit (for example, a register or a cache) in the chip; or the storage unit 104 may be a storage unit (for example, a read-only memory (read-only memory, ROM)) that is located outside the chip and that is in the domain master node, another type of static storage device (for example, a random access memory (random access memory, RAM)) that can store static information and an instruction, or the like.

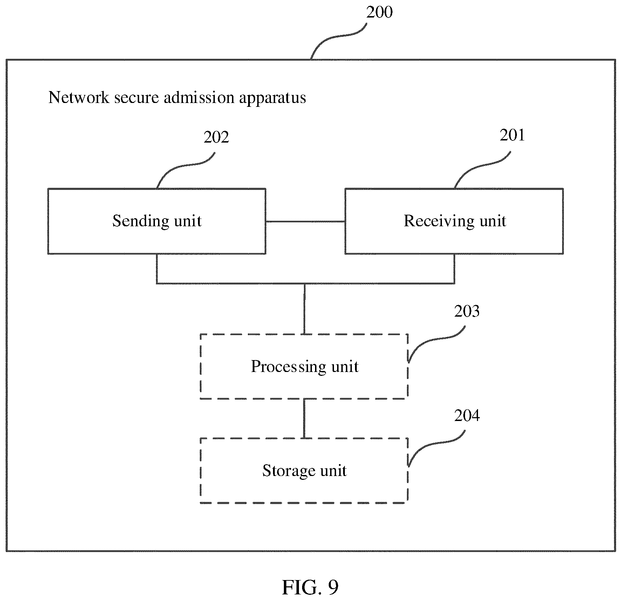

When an integrated unit (device or component) is used, FIG. 9 is a schematic structural diagram of another network secure admission apparatus according to an embodiment of this application. A network secure admission apparatus 200 may be a domain master node, or may be a component in a domain master node. Referring to FIG. 9, the network secure admission apparatus 200 includes a receiving unit 201 and a sending unit 202. The receiving unit 201 is configured to receive an authorization operation of a user, where the authorization operation is used to indicate that a home network device is allowed to join a domain to perform a pairing operation. The sending unit 202 is configured to send domain name configuration information of the domain master node. The receiving unit 201 is configured to receive a domain name configuration acknowledgment message sent by the home network device, where the domain name configuration acknowledgment message is used to indicate that the home network device uses a domain name included in a domain name configuration message of the domain master node as a domain name of the home network device.

The authorization operation of the user is performed according to prompt information sent by the sending unit 202 to the user, and the prompt information is used to prompt that there is a home network device that needs to join the domain for pairing.

The prompt information is displayed on the domain master node locally or displayed on a proxy node, and the authorization operation is a key pressing operation performed by the user on the domain master node or the proxy node. For example, the prompt information displayed on the domain master node locally or the prompt information displayed on the proxy node is a light flashing prompt, and the operation performed by the user on the domain master node or the proxy node is a key pressing operation. Alternatively, the prompt information is sent by the sending unit 202 to a terminal used by the user and is displayed on the terminal, an application program used by the user to perform the authorization operation is installed on the terminal, and the authorization operation is triggered by performing an operation by the user on the application program.

In a possible implementation, the receiving unit 201 is further configured to receive a notification message sent by a home network device, where the notification message is used to notify that there is a home network device that needs to join the domain for pairing. The sending unit 202 is configured to send the prompt information to the user based on the notification message received by the receiving unit 201. The notification message sent by the home network device includes an identifier of the home network device.

The network secure admission apparatus 200 may further include a processing unit 203, where the processing unit 203 is configured to enable a pairing window after the receiving unit 201 receives the domain name configuration acknowledgment message sent by the home network device. The sending unit 202 is further configured to send indication information within an effective period of the pairing window, where the indication information is used to indicate that the home network device is allowed to join the domain for pairing.

The network secure admission apparatus 200 may further include a storage unit 204. The storage unit 204 is configured to store a computer-executable instruction. The processing unit 203 is connected to the storage unit 204, and the processing unit 203 executes the computer-executable instruction stored in the storage unit 204, so that the network secure admission apparatus 200 performs the network secure admission method performed by the domain master node in the foregoing method embodiments.

When a hardware form is used for implementation, in this embodiment of this application, the receiving unit 201 and the sending unit 202 may be a communications interface, a transceiver, a transceiver circuit, or the like. The communications interface is a collective term, and may include one or more interfaces. The transceiver circuit may be a radio frequency circuit. The processing unit 203 may be a processor or a controller. The storage unit 204 may be a memory.

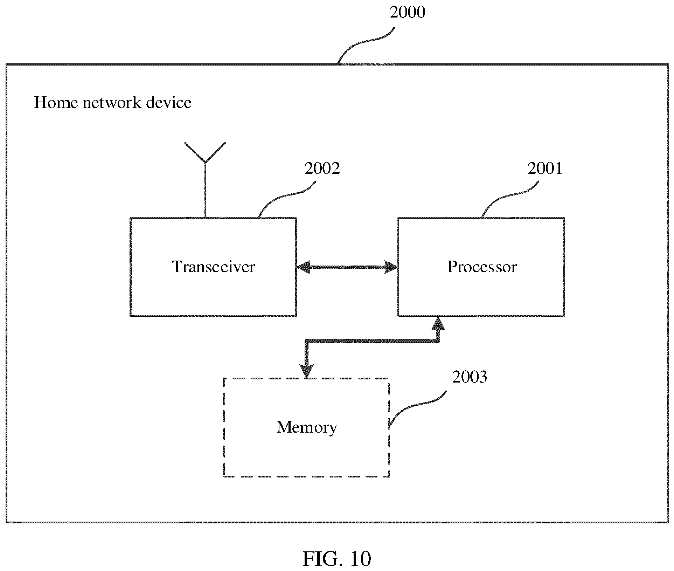

When the receiving unit 201 and the sending unit 202 are a transceiver and the processing unit 203 is a processor, the network secure admission apparatus 200 in this embodiment of this application may be a network secure admission apparatus shown in FIG. 10, the network secure admission apparatus shown in FIG. 10 may be applied to a home network device, and the home network device may be a domain master node.

FIG. 10 is a schematic structural diagram of a home network device 2000 according to an embodiment of this application, to be specific, is another possible schematic structural diagram of the network secure admission apparatus 200. Referring to FIG. 10, the home network device 2000 includes a processor 2001 and a transceiver 2002. Alternatively, the processor 2001 may be a controller. The processor 2001 is configured to support the home network device 2000 in performing functions of the domain master node in FIG. 6. The transceiver 2002 is configured to support the home network device 2000 in performing functions of sending and receiving a message. The home network device 2000 may further include a memory 2003. The memory 2003 is configured to be coupled to the processor 2001, and store a program instruction and data that are necessary for the home network device 2000. The processor 2001, the transceiver 2002, and the memory 2003 are connected. The memory 2003 is configured to store an instruction. The processor 2001 is configured to execute the instruction stored in the memory 2003, to control the transceiver 2002 to send and receive a signal, and to complete the steps of the corresponding functions performed by the domain master node in the foregoing method.

In this embodiment of this application, for concepts, explanations, detailed descriptions, and other steps that are related to the network secure admission apparatus 200 and the home network device 2000 and related to the technical solutions provided in the embodiments of this application, refer to descriptions about the content in the foregoing method embodiments or other embodiments. Details are not described herein.

When a chip form is used for implementation, the network secure admission apparatus 200 in this embodiment of this application may be applied to a chip in a home network device. The chip has functions of implementing the network secure admission method performed by the domain master node in the foregoing method embodiments. The functions may be implemented by hardware, or may be implemented by hardware executing corresponding software. The hardware or the software includes one or more units corresponding to the foregoing functions. The chip includes a receiving unit 201 and a sending unit 202. The receiving unit 201 and the sending unit 202 may be an input/output interface, a pin, a circuit, or the like on the chip. The chip may further include a processing unit 203 and a storage unit 204. The processing unit 203 may be, for example, a processor, and the storage unit 204 may be, for example, a memory. The processing unit 203 may execute a computer-executable instruction stored in the storage unit 204, so that the chip performs the network secure admission method performed by the domain master node in the foregoing method embodiments. Optionally, the storage unit 204 may be a storage unit (for example, a register or a cache) in the chip; or the storage unit 204 may be a storage unit (for example, a read-only memory (read-only memory, ROM)) that is located outside the chip and that is in the domain master node, another type of static storage device (for example, a random access memory (random access memory, RAM)) that can store static information and an instruction, or the like.

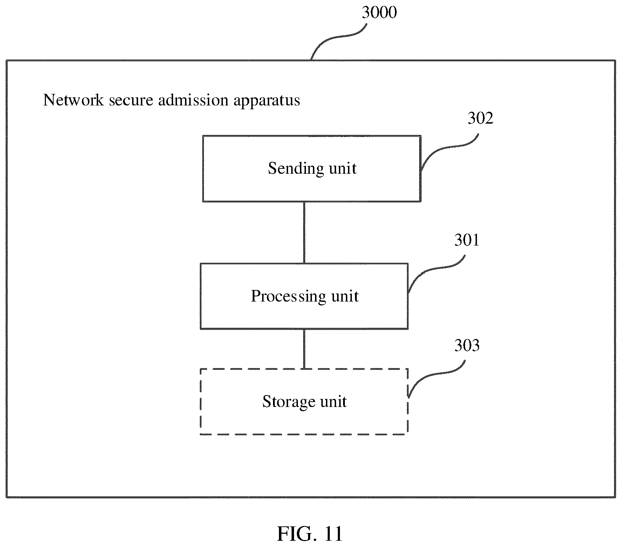

When an integrated unit (device or component) is used, FIG. 11 is a schematic structural diagram of a network secure admission apparatus 300 according to an embodiment of this application. The network secure admission apparatus 300 may be a home network device that needs to join a domain for pairing (a home network device that is allowed to be used as a domain end point node to join a domain), or may be a component in a home network device that needs to join a domain for pairing (a home network device that is allowed to be used as a domain end point node to join a domain). Referring to FIG. 11, the network secure admission apparatus 300 includes a processing unit 301 and a sending unit 302. The processing unit 301 is configured to determine that the home network device needs to join the domain for pairing. When the processing unit 301 determines that the home network device needs to join the domain for pairing, the sending unit 302 is configured to send a notification message to a domain master node, where the notification message is used to notify the domain master node that there is a home network device that needs to join the domain for pairing.

When detecting that the home network device is powered on or that there is a new domain, the processing unit 301 determines that the home network device needs to join the domain for pairing (the home network device is allowed to be used as the domain end point node to join the domain).

Optionally, the network secure admission apparatus 300 may further include a storage unit 303. The storage unit 303 may be, for example, a memory. When the network secure admission apparatus 300 includes a storage unit 303, the storage unit 303 is configured to store a computer-executable instruction. The processing unit 301 is connected to the storage unit 303, and the processing unit 301 executes the computer-executable instruction stored in the storage unit 303, so that the network secure admission apparatus 300 performs the network secure admission method performed by the home network device that needs to join a domain for pairing in the foregoing method embodiments.

In this embodiment of this application, the processing unit 301 may be a processor. The sending unit 302 may be a transmitter, and the transmitter may include a radio frequency circuit. The storage unit 303 may be a memory.

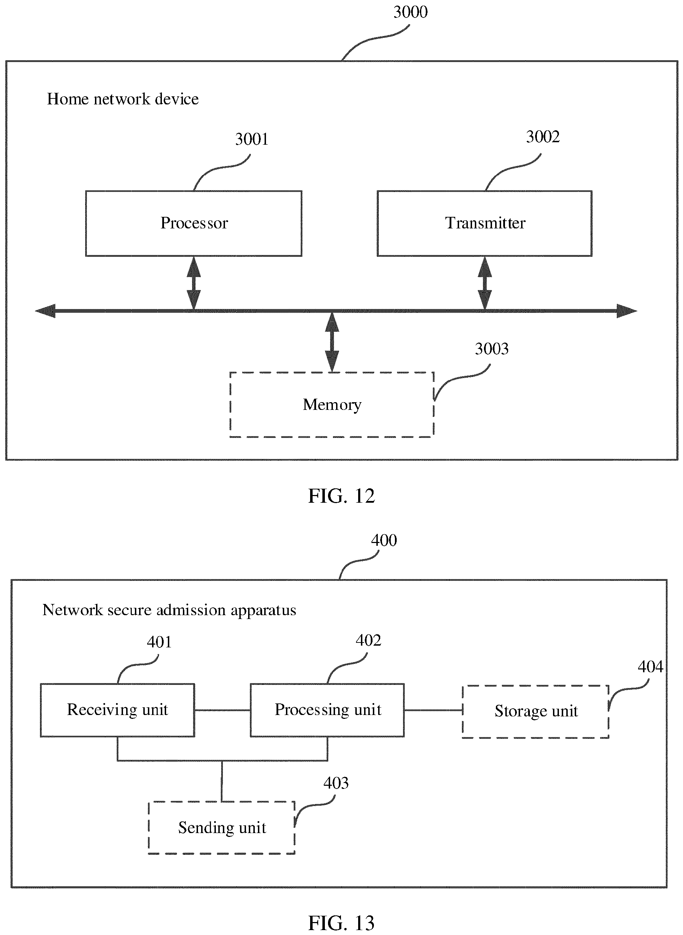

When the processing unit 301 is a processor, the sending unit 302 is a transmitter, and the storage unit 303 is a memory, the network secure admission apparatus 300 in this embodiment of this application may be a network secure admission apparatus shown in FIG. 12, the network secure admission apparatus shown in FIG. 12 may be applied to a home network device, and the home network device may be a home network device that needs to join a domain for pairing.

FIG. 12 is a schematic structural diagram of a home network device 3000 according to an embodiment of this application, to be specific, is another possible schematic structural diagram of the network secure admission apparatus 300. Referring to FIG. 12, the home network device 3000 includes a processor 3001 and a transmitter 3002. Alternatively, the processor 3001 may be a controller. The processor 3001 is configured to support the home network device 3000 in performing functions of the home network device that needs to join a domain for pairing in FIG. 4 and FIG. 5. The transmitter 3002 is configured to support the home network device 3000 in performing functions of sending and receiving a message. The home network device 3000 may further include a memory 3003. The memory 3003 is configured to be coupled to the processor 3001, and store a program instruction and data that are necessary for the home network device 3000. The processor 3001, the transmitter 3002, and the memory 3003 are connected. The memory 3003 is configured to store an instruction. The processor 3001 is configured to execute the instruction stored in the memory 3003, to control the transmitter 3002 to send and receive a signal, and to complete the steps of the corresponding functions performed by the home network device that needs to join a domain for pairing in the foregoing method.

In this embodiment of this application, for concepts, explanations, detailed descriptions, and other steps that are related to the network secure admission apparatus 300 and the home network device 3000 and related to the technical solutions provided in the embodiments of this application, refer to descriptions about the content in the foregoing method embodiments or other embodiments. Details are not described herein.

When a chip form is used for implementation, the network secure admission apparatus 300 in this embodiment of this application may be applied to a chip in a home network device that needs to join a domain for pairing. The chip has functions of implementing the network secure admission method performed by the home network device that needs to join a domain for pairing in the foregoing method embodiments. The functions may be implemented by hardware, or may be implemented by hardware executing corresponding software. The hardware or the software includes one or more units corresponding to the foregoing functions. The chip includes a processing unit 301 and a sending unit 302. The processing unit 301 may be, for example, a processor, and the sending unit 302 may be an input/output interface, a pin, a circuit, or the like on the chip. The chip may further include a storage unit 303. The storage unit 303 may be, for example, a memory. The processing unit 301 may execute a computer-executable instruction stored in the storage unit 303, so that the chip performs the network secure admission method performed by the home network device that needs to join a domain for pairing in the foregoing method embodiments. Optionally, the storage unit 303 may be a storage unit (for example, a register or a cache) in the chip; or the storage unit 303 may be a storage unit (for example, a read-only memory (read-only memory, ROM)) that is located outside the chip and that is in the home network device that needs to join a domain for pairing, another type of static storage device (for example, a random access memory (random access memory, RAM)) that can store static information and an instruction, or the like.

When an integrated unit (device or component) is used, FIG. 13 is a schematic structural diagram of a network secure admission apparatus 400 according to an embodiment of this application. The network secure admission apparatus 400 may be a home network device that needs to join a domain for pairing, or may be a component in a home network device that needs to join a domain for pairing. Referring to FIG. 13, the network secure admission apparatus 400 includes a receiving unit 401 and a processing unit 402. The receiving unit 401 is configured to receive domain name configuration information of a domain master node that is sent by the domain master node. The processing unit 402 is configured to use a domain name included in the domain name configuration information of the domain master node that is received by the receiving unit 401 as a domain name of the home network device that needs to join a domain for pairing (the home network device that is allowed to be used as a domain end point node to join a domain), and send a domain name configuration acknowledgment message to the domain master node.

When detecting that the home network device is powered on or that there is a new domain, the processing unit 402 determines that the home network device needs to join the domain for pairing (the home network device is allowed to be used as the domain end point node to join the domain).

In a possible implementation, the network secure admission apparatus 400 may further include a sending unit 403. The sending unit 403 is configured to send a notification message to the domain master node before the receiving unit 401 receives the domain name configuration information of the domain master node that is sent by the domain master node and when the processing unit 402 determines that the home network device needs to join the domain for pairing (the home network device is allowed to be used as the domain end point node to join the domain), where the notification message is used to notify the domain master node that there is a home network device that needs to join the domain for pairing (a home network device that is allowed to be used as the domain end point node to join the domain).

Optionally, the network secure admission apparatus 400 may further include a storage unit 404. The storage unit 404 may be, for example, a memory. When the network secure admission apparatus 400 includes a storage unit 404, the storage unit 404 is configured to store a computer-executable instruction. The processing unit 402 is connected to the storage unit 404, and the processing unit 402 executes the computer-executable instruction stored in the storage unit 404, so that the network secure admission apparatus 400 performs the network secure admission method performed by the home network device that needs to join a domain for pairing in the foregoing method embodiments.

In this embodiment of this application, the receiving unit 401 may be a receiver, a communications interface, a receiver circuit, or the like. The processing unit 402 may be, for example, a processor. The sending unit 403 may be a transmitter, a communications interface, a transmitter circuit, or the like. The communications interface is a collective term, and may include one or more interfaces. The receiver circuit and the transmitter circuit may include a radio frequency circuit. The storage unit 404 may be a memory.

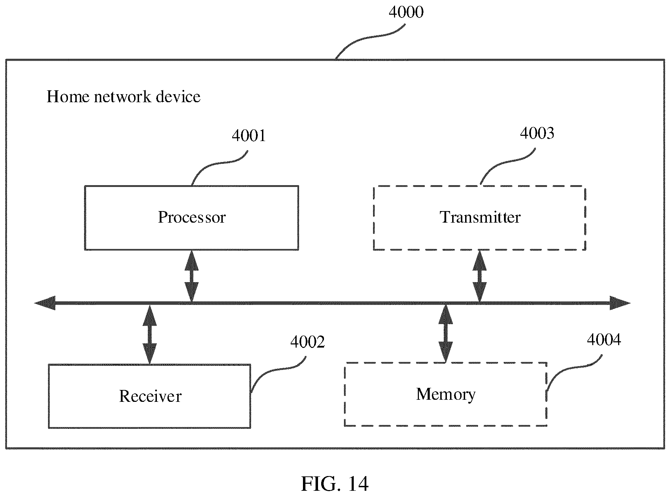

When the receiving unit 401 is a receiver, the processing unit 402 is a processor, the sending unit 403 is a transmitter, and the storage unit 404 is a memory, the network secure admission apparatus 400 in this embodiment of this application may be a network secure admission apparatus shown in FIG. 14, the network secure admission apparatus shown in FIG. 14 may be applied to a home network device, and the home network device may be a home network device that needs to join a domain for pairing.

FIG. 14 is a schematic structural diagram of a home network device 4000 according to an embodiment of this application, to be specific, is another possible schematic structural diagram of the network secure admission apparatus 400. Referring to FIG. 14, the home network device 4000 includes a processor 4001 and a receiver 4002, and may further include a transmitter 4003. Alternatively, the processor 4001 may be a controller. The processor 4001 is configured to support the home network device 4000 in performing functions of the home network device that needs to join a domain for pairing in FIG. 6. The receiver 4002 and the transmitter 4003 are configured to support the home network device 4000 in performing functions of sending and receiving a message. The home network device 4000 may further include a memory 4004. The memory 4004 is configured to be coupled to the processor 4001, and store a program instruction and data that are necessary for the home network device 4000. The processor 4001, the receiver 4002, the transmitter 4003, and the memory 4004 are connected. The memory 4004 is configured to store an instruction. The processor 4001 is configured to execute the instruction stored in the memory 4004, to control the receiver 4002 and the transmitter 4003 to send and receive a signal, and to complete the steps of the corresponding functions performed by the home network device that needs to join a domain for pairing in the foregoing method.

In this embodiment of this application, for concepts, explanations, detailed descriptions, and other steps that are related to the network secure admission apparatus 400 and the home network device 4000 and related to the technical solutions provided in the embodiments of this application, refer to descriptions about the content in the foregoing method embodiments or other embodiments. Details are not described herein.

When a chip form is used for implementation, the network secure admission apparatus 400 in this embodiment of this application may be applied to a chip in a home network device that needs to join a domain for pairing. The chip has functions of implementing the network secure admission method performed by the home network device that needs to join a domain for pairing in the foregoing method embodiments. The functions may be implemented by hardware, or may be implemented by hardware executing corresponding software. The hardware or the software includes one or more units corresponding to the foregoing functions. The chip includes a receiving unit 401 and a processing unit 402. The chip may further include a sending unit 403, or may further include a storage unit 404. The processing unit 402 may be, for example, a processor, and the receiving unit 401 and the sending unit 403 may be an input/output interface, a pin, a circuit, or the like on the chip. The storage unit 404 may be, for example, a memory. The processing unit 402 may execute a computer-executable instruction stored in the storage unit 404, so that the chip performs the network secure admission method performed by the home network device that needs to join a domain for pairing in the foregoing method embodiments. Optionally, the storage unit 404 may be a storage unit (for example, a register or a cache) in the chip; or the storage unit 404 may be a storage unit (for example, a read-only memory (read-only memory, ROM)) that is located outside the chip and that is in the home network device that needs to join a domain for pairing, another type of static storage device (for example, a random access memory (random access memory, RAM)) that can store static information and an instruction, or the like.

It should be noted that the processor in the embodiments of this application may be a central processing unit (central processing unit, CPU), a general-purpose processor, a digital signal processor (digital signal processing, DSP), an application-specific integrated circuit (application-specific integrated circuit, ASIC), a field programmable gate array (field programmable gate array, FPGA), or another programmable logical device, a transistor logical device, a hardware component, or a combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of the DSP and a microprocessor, or the like.

The memory may be integrated in the processor, or may be separate from the processor.

In an implementation, the transceiver may include a receiver and a transmitter. It may be considered that functions of the receiver and the transmitter are implemented by using a transceiver circuit or a dedicated transceiver chip. It may be considered that the processor is implemented by using a dedicated processing chip, a processing circuit, a processor, or a general-purpose chip.

In another implementation, program code for implementing functions of the processor, the receiver, and the transmitter is stored in the memory, and the general-purpose processor implements the functions of the processor, the receiver, and transmitter by executing the code in the memory.

According to the method provided in the embodiments of this application, an embodiment of this application further provides a home network communications system, including the foregoing domain master node and one or more home network devices that need to join a domain for paring.

An embodiment of this application further provides a computer storage medium. The computer storage medium stores some instructions. When the instructions are executed, the network secure admission method in the foregoing method embodiments may be completed.

An embodiment of this application further provides a computer program product. The computer program product includes a computer program, and the computer program is used to perform the network secure admission method the foregoing method embodiments.

A person skilled in the art should understand that the embodiments of this application may be provided as a method, a system, or a computer program product. Therefore, the embodiments of this application may use a form of hardware only embodiments, software only embodiments, or embodiments with a combination of software and hardware. Moreover, the embodiments of this application may use a form of a computer program product that is implemented on one or more computer-usable storage mediums (including but not limited to a disk memory, a CD-ROM, an optical memory, and the like) that include computer-usable program code.

The embodiments of this application are described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by the computer or the processor of the any other programmable data processing device generate an apparatus for implementing a specific function in one or more processes in the flowcharts and/or in one or more blocks in the block diagrams.

These computer program instructions may be stored in a computer-readable memory that can instruct the computer or the any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may be loaded onto the computer or the any other programmable data processing device, so that a series of operations and steps are performed on the computer or the any other programmable device, thereby generating computer-implemented processing. Therefore, the instructions executed on the computer or the any other programmable device provide steps for implementing a specific function in one or more processes in the flowcharts and/or in one or more blocks in the block diagrams.

## Claims

1. A network secure admission method comprising:
sending (S101a, S101b, S102b, S202a, S202b, S203b, S302a, S302b, S303b), by a domain master node, prompt information to a user, wherein the prompt information is used to prompt that there is a home network device that needs to join a domain for pairing;
receiving (S102a, S103b, S203a, S204b, S303a, S304b), by the domain master node, an authorization operation of the user, wherein the authorization operation is used to indicate that the home network device is allowed to join the domain to perform a pairing operation, and the authorization operation is performed by the user according to the prompt information; and
enabling (S103a, S105b, S204a, S206b, S306a, S308b), by the domain master node, a pairing window after receiving the authorization operation, and sending indication information within an effective period of the pairing window, wherein the indication information is used to indicate that the home network device is allowed to join the domain for pairing.

2. The method according to claim 1, wherein the prompt information is displayed on the domain master node locally or displayed on a proxy node, and the authorization operation is an operation performed by the user on the domain master node or the proxy node; or
the prompt information is sent by the domain master node or a proxy node to a terminal used by the user and is displayed on the terminal, an application program used by the user to perform the authorization operation is installed on the terminal, and the authorization operation is triggered by performing an operation by the user on the application program.

3. The method according to claim 2, wherein the prompt information displayed on the domain master node locally or displayed on the proxy node is a light flashing prompt, and the operation performed by the user on the domain master node or the proxy node is a key pressing operation.

4. The method according to any one of claims 1 to 3, wherein the sending, by a domain master node, prompt information to a user comprises:
receiving (S201a, S201b, S301a, S301b), by the domain master node, a notification message sent by the home network device, wherein the notification message is used to notify that there is a home network device that needs to join the domain for pairing; and
directly sending (S101a, S202a, S302a), by the domain master node, the prompt information to the user based on the notification message or indirectly sending (S102b, S203b, S303b) the prompt information to the user by using the proxy node based on the notification message.

5. The method according to claim 4, wherein the notification message comprises an identifier of the home network device that sends the notification message; and
the indication information comprises the identifier.

6. A home network device, wherein the home network device is used as a domain master node, and is configured to manage communication transmission resource allocation between a home network and a node in the home network, wherein the home network is a network in which communication is performed by using a home network medium, and the home network medium comprises at least one of a power line, a twisted pair, a plastic optical fiber, or a coaxial cable; and
the home network device used as the domain master node manages a home network device used as a domain end point node to access the home network, and when the domain master node receives a notification message that is sent by the home network device used as the domain end point node and that is used to notify that there is a home network device that needs to access the home network, the domain master node is configured to perform the following steps:
sending prompt information to a user, wherein the prompt information is used to prompt that there is a home network device that needs to access the home network;
receiving an authorization operation of the user, wherein the authorization operation is used to indicate that the home network device is allowed to access the home network, and the authorization operation is performed by the user according to the prompt information; and
enabling a pairing window after receiving the authorization operation, and sending indication information within an effective period of the pairing window, wherein the indication information is used to indicate that the home network device is allowed to access the home network.

7. The home network device according to claim 6, wherein the prompt information is a light flashing prompt on the domain master node or on a proxy node, and the authorization operation is a key pressing operation performed by the user on the domain master node or the proxy node.

8. The home network device according to claim 6, wherein the prompt information is a push message that is sent by the domain master node to a terminal used by the user or indirectly sent to a terminal used by the user by using the proxy node and that is displayed on the terminal, an application program used by the user to perform the authorization operation is installed on the terminal, and the authorization operation is triggered by performing an operation by the user on the application program.

9. The home network device according to any one of claims 6 to 8, wherein the notification message comprises an identifier of the home network device; and
the indication information comprises the identifier.

10. The home network device according to claim 6, wherein after receiving the authorization operation of the user, the domain master node is further configured to perform the following steps:
sending domain name configuration information of the domain master node; and
receiving a domain name configuration acknowledgment message sent by the home network device, wherein the domain name configuration acknowledgment message is used to indicate that the home network device uses a domain name comprised in the domain name configuration information of the domain master node as a domain name of the home network device.

11. The home network device according to claim 6, wherein the home network device is used as an access device of the home network and is connected to an operator network, to implement cross-network data transmission between the operator network and the home network.

## Patentansprüche

1. Verfahren für einen sicheren Zugang zu einem Netzwerk, umfassend:
Senden (S101a, S101b, S102b, S202a, S202b, S203b, S302a, S302b, S303b), durch einen Domänenmasterknoten, von Hinweisinformationen an einen Benutzer, wobei die Hinweisinformationen genutzt werden, um darauf hinzuweisen, dass es eine Heimnetzwerkvorrichtung gibt, die einer Domäne für eine Paarung beitreten muss;
Empfangen (S102a, S103b, S203a, S204b, S303a, S304b), durch den Domänenmasterknoten, eines Autorisierungsablaufes des Benutzers, wobei der Autorisierungsablauf genutzt wird, um anzugeben, dass es der Heimnetzwerkvorrichtung erlaubt ist, der Domäne beizutreten, um einen Paarungsablauf durchzuführen, und der Autorisierungsablauf durch den Benutzer gemäß den Hinweisinformationen durchgeführt wird; und
Aktivieren (S103a, S105b, S204a, S206b, S306a, S308b), durch den Domänenmasterknoten, eines Paarungsfensters nach dem Empfangen des Autorisierungablaufes, und Senden von Angabeinformationen innerhalb einer effektiven Zeitspanne des Paarungsfensters, wobei die Angabeinformationen genutzt werden, um anzugeben, dass es der Heimnetzwerkvorrichtung erlaubt ist, der Domäne für die Paarung beizutreten.

2. Verfahren nach Anspruch 1, wobei die Hinweisinformationen auf dem Domänenmasterknoten lokal angezeigt oder auf einem Proxy-Knoten angezeigt werden und der Autorisierungsablauf ein Ablauf ist, der durch den Benutzer auf dem Domänenmasterknoten oder dem Proxy-Knoten durchgeführt wird; oder
die Hinweisinformationen durch den Domänenmasterknoten oder einen Proxy-Knoten an ein Endgerät gesendet werden, das durch den Benutzer genutzt wird, und auf dem Endgerät angezeigt werden, ein Anwendungsprogramm, das durch den Benutzer genutzt wird, um den Autorisierungsablauf durchzuführen, auf dem Endgerät installiert ist, und der Autorisierungsablauf durch Durchführen eines Ablaufes durch den Benutzer auf dem Anwendungsprogramm ausgelöst wird.

3. Verfahren nach Anspruch 2, wobei die Hinweisinformationen, die auf dem Domänenmasterknoten lokal angezeigt oder auf dem Proxy-Knoten angezeigt werden, ein Blinklichthinweis sind, und der Ablauf, der durch den auf dem Domänenmasterknoten oder dem Proxy-Knoten durchgeführt wird, ein Tastendruckablauf ist.

4. Verfahren nach einem der Ansprüche 1 bis 3, wobei das Senden, durch einen Domänenmasterknoten, von Hinweisinformationen an einen Benutzer umfasst:
Empfangen (S201a, S201b, S301a, S301b), durch den Domänenmasterknoten, einer Benachrichtigungsnachricht, die durch die Heimnetzwerkvorrichtung gesendet wird, wobei die Benachrichtigungsnachricht genutzt wird, um zu benachrichtigen, dass es eine Heimnetzwerkvorrichtung gibt, die der Domäne für die Paarung beitreten muss; und
direktes Senden (S101a, S202a, S302a), durch den Domänenmasterknoten, der Hinweisinformationen an den Benutzer basierend auf der Benachrichtigungsnachricht, oder indirektes Senden (S102b, S203b, S303b) der Hinweisinformationen an den Benutzer durch Verwenden des Proxy-Knotens basierend auf der Benachrichtigungsnachricht.

5. Verfahren nach Anspruch 4, wobei die Benachrichtigungsnachricht einen Bezeichner der Heimnetzwerkvorrichtung umfasst, die die Benachrichtigungsnachricht sendet; und
die Angabeinformationen den Bezeichner umfassen.

6. Heimnetzwerkvorrichtung, wobei die Heimnetzwerkvorrichtung als ein Domänenmasterknoten genutzt wird und konfiguriert ist, um eine Kommunikationsübertragungsressourcenzuweisung zwischen einem Heimnetzwerk und einem Knoten in dem Heimnetzwerk zu verwalten, wobei das Heimnetzwerk ein Netzwerk ist, in dem die Kommunikation durch Verwenden eines Heimnetzwerkmediums durchgeführt wird, und das Heimnetzwerkmedium mindestens eines von einer Stromleitung, einem verdrillten Leitungspaar, einer polymeren optischen Faser oder einem Koaxialkabel umfasst; und
die Heimnetzwerkvorrichtung, die als der Domänenmasterknoten genutzt wird, eine Heimnetzwerkvorrichtung verwaltet, die als ein Domänenendpunktknoten genutzt wird, um auf das Heimnetzwerk zuzugreifen, und wenn der Domänenmasterknoten eine Benachrichtigungsnachricht empfängt, die durch die Heimnetzwerkvorrichtung gesendet wird, die als der Domänenendpunktknoten genutzt wird, und die genutzt wird, um zu benachrichtigen, dass es eine Heimnetzwerkvorrichtung gibt, die auf das Heimnetzwerk zugreifen muss, der Domänenmasterknoten konfiguriert ist, um die folgenden Schritte durchzuführen:
Senden von Hinweisinformationen an einen Benutzer, wobei die Hinweisinformationen genutzt werden, um darauf hinzuweisen, dass es eine Heimnetzwerkvorrichtung gibt, die auf das Heimnetzwerk zugreifen muss;
Empfangen eines Autorisierungsablaufes des Benutzers, wobei der Autorisierungsablauf genutzt wird, um anzugeben, dass es der Heimnetzwerkvorrichtung erlaubt ist, auf das Heimnetzwerk zuzugreifen, und der Autorisierungsablauf durch den Benutzer gemäß den Hinweisinformationen durchgeführt wird; und
Aktivieren eines Paarungsfensters nach dem Empfangen des Autorisierungsablaufes, und Senden von Angabeinformationen innerhalb einer effektiven Zeitspanne des Paarungsfensters, wobei die Angabeinformationen genutzt werden, um anzugeben, dass es der Heimnetzwerkvorrichtung erlaubt ist, auf das Heimnetzwerk zuzugreifen.

7. Heimnetzwerkvorrichtung nach Anspruch 6, wobei die Hinweisinformationen ein Lichtblinkhinweis auf dem Domänenmasterknoten oder auf einem Proxy-Knoten sind und der Autorisierungsablauf ein Tastendruckablauf ist, der durch den Benutzer auf dem Domänenmasterknoten oder dem Proxy-Knoten durchgeführt wird.

8. Heimnetzwerkvorrichtung nach Anspruch 6, wobei die Hinweisinformationen eine Push-Nachricht sind, die durch den Domänenmasterknoten an ein Endgerät gesendet wird, das durch den Benutzer genutzt wird, oder an ein Endgerät, das durch den Benutzer genutzt wird, durch Verwenden des Proxy-Knotens indirekt gesendet wird, und die auf dem Endgerät angezeigt wird, ein Anwendungsprogramm, das durch den Benutzer genutzt wird, um den Autorisierungsablauf durchzuführen, auf dem Endgerät installiert ist, und der Autorisierungsablauf durch Durchführen eines Ablaufes durch den Benutzer auf dem Anwendungsprogramm ausgelöst wird.

9. Heimnetzwerkvorrichtung nach einem der Ansprüche 6 bis 8, wobei die Benachrichtigungsnachricht einen Bezeichner der Heimnetzwerkvorrichtung umfasst; und
die Angabeinformationen den Bezeichner umfassen.

10. Heimnetzwerkvorrichtung nach Anspruch 6, wobei nach dem Empfangen des Autorisierungsablaufes des Benutzers der Domänenmasterknoten ferner konfiguriert ist, um die folgenden Schritte durchzuführen:
Senden von Domänennamenkonfigurationsinformationen des Domänenmasterknotens; und
Empfangen einer Domänennamenkonfigurationsbestätigungsnachricht, die durch die Heimnetzwerkvorrichtung gesendet wird, wobei die Domänennamenkonfigurationsbestätigungsnachricht genutzt wird, um anzugeben, dass die Heimnetzwerkvorrichtung einen Domänennamen nutzt, der in den Domänennamenkonfigurationsinformationen des Domänenmasterknotens als ein Domänenname der Heimnetzwerkvorrichtung enthalten ist.

11. Heimnetzwerkvorrichtung nach Anspruch 6, wobei die Heimnetzwerkvorrichtung als eine Zugriffsvorrichtung des Heimnetzwerks genutzt wird und mit einem Betreibernetzwerk verbunden ist, um eine netzwerkübergreifende Datenübertragung zwischen dem Betreibernetzwerk und dem Heimnetzwerk zu implementieren.

## Revendications

1. Procédé d'admission sécurisé de réseau comprenant :
l'envoi (S101a, S101b, S102b, S202a, S202b, S203b, S302a, S302b, S303b), par un noeud maître de domaine, d'informations d'invite à un utilisateur, les informations d'invite étant utilisées pour indiquer qu'un dispositif de réseau domestique a besoin de rejoindre un domaine pour l'appariement ;
la réception (S102a, S103b, S203a, S204b, S303a, S304b), par le noeud maître de domaine, d'une opération d'autorisation de l'utilisateur, l'opération d'autorisation étant utilisée pour indiquer que le dispositif de réseau domestique est autorisé à rejoindre le domaine pour effectuer une opération d'appariement, et l'opération d'autorisation étant effectuée par l'utilisateur selon les informations d'invite ; et
l'activation (S103a, S105b, S204a, S206b, S306a, S308b), par le noeud maître de domaine, d'une fenêtre d'appariement après réception de l'opération d'autorisation, et l'envoi d'informations d'indication dans une période effective de la fenêtre d'appariement, les informations d'indication étant utilisées pour indiquer que le dispositif du réseau domestique est autorisé à rejoindre le domaine pour l'appariement.

2. Procédé selon la revendication 1, les informations d'invite étant affichées sur le noeud maître de domaine localement ou affichées sur un noeud mandataire, et l'opération d'autorisation est une opération effectuée par l'utilisateur sur le noeud maître de domaine ou le noeud mandataire ; ou
les informations d'invite sont envoyées par le noeud maître de domaine ou un noeud mandataire à un terminal utilisé par l'utilisateur et sont affichées sur le terminal, un programme d'application utilisé par l'utilisateur pour effectuer l'opération d'autorisation est installé sur le terminal, et l'opération d'autorisation est déclenchée par l'exécution d'une opération par l'utilisateur sur le programme d'application.

3. Procédé selon la revendication 2, les informations d'invite affichées sur le noeud maître de domaine localement ou affichées sur le noeud mandataire sont une invite clignotante, et l'opération effectuée par l'utilisateur sur le noeud maître de domaine ou le noeud mandataire est une opération de pression de touche.

4. Procédé selon l'une quelconque des revendications 1 à 3, l'envoi, par un noeud maître de domaine, d'informations d'invite à un utilisateur comprenant :
la réception (S201a, S201b, S301a, S301b), par le noeud maître de domaine, d'un message de notification envoyé par le dispositif de réseau domestique, le message de notification étant utilisé pour notifier qu'un dispositif de réseau domestique doit rejoindre le domaine pour l'appariement ; et
l'envoi direct (S101a, S202a, S302a), par le noeud maître de domaine, des informations d'invite à l'utilisateur sur la base du message de notification ou l'envoi indirect (S102b, S203b, S303b) des informations d'invite à l'utilisateur à l'aide du noeud mandataire basé sur le message de notification.

5. Procédé selon la revendication 4, le message de notification comprenant un identifiant du dispositif de réseau domestique qui envoie le message de notification ; et
les informations d'indication comprennent l'identifiant.

6. Dispositif de réseau domestique, le dispositif de réseau domestique étant utilisé comme noeud maître de domaine, et étant configuré pour gérer l'allocation de ressources de transmission de communication entre un réseau domestique et un noeud du réseau domestique, le réseau domestique étant un réseau dans lequel la communication est effectuée en utilisant un support de réseau domestique, et le support de réseau domestique comprenant au moins l'un parmi une ligne électrique, une paire torsadée, une fibre optique en plastique ou un câble coaxial ; et
le dispositif de réseau domestique utilisé comme noeud maître de domaine gère un dispositif de réseau domestique utilisé comme noeud de point de terminaison de domaine pour accéder au réseau domestique, et lorsque le noeud maître de domaine reçoit un message de notification qui est envoyé par le dispositif de réseau domestique utilisé comme noeud de point d'extrémité de domaine et qui est utilisé pour notifier qu'un dispositif de réseau domestique doit accéder au réseau domestique, le noeud maître de domaine est configuré pour effectuer les étapes suivantes :
l'envoi d'informations d'invite à un utilisateur, les informations d'invite étant utilisées pour indiquer qu'il existe un dispositif de réseau domestique qui doit accéder au réseau domestique ;
la réception d'une opération d'autorisation de l'utilisateur, l'opération d'autorisation étant utilisée pour indiquer que le dispositif de réseau domestique est autorisé à accéder au réseau domestique, et l'opération d'autorisation étant effectuée par l'utilisateur selon les informations d'invite ; et
l'activation d'une fenêtre d'appariement après réception de l'opération d'autorisation, et l'envoi d'informations d'indication dans une période effective de la fenêtre d'appariement, les informations d'indication étant utilisées pour indiquer que le dispositif de réseau domestique est autorisé à accéder au réseau domestique.

7. Dispositif de réseau domestique selon la revendication 6, les informations d'invite étant une invite clignotante sur le noeud maître de domaine ou sur un noeud mandataire, et l'opération d'autorisation étant une opération de pression de touche effectuée par l'utilisateur sur le noeud maître de domaine ou le noeud proxy.

8. Dispositif de réseau domestique selon la revendication 6, les informations d'invite étant un message push qui est envoyé par le noeud maître de domaine à un terminal utilisé par l'utilisateur ou envoyé indirectement à un terminal utilisé par l'utilisateur à l'aide du noeud mandataire et qui est affiché sur le terminal, un programme d'application utilisé par l'utilisateur pour effectuer l'opération d'autorisation est installé sur le terminal, et l'opération d'autorisation est déclenchée en effectuant une opération par l'utilisateur sur le programme d'application.

9. Dispositif de réseau domestique selon l'une quelconque des revendications 6 à 8, le message de notification comprenant un identifiant du dispositif de réseau domestique ; et
les informations d'indication comprennent l'identifiant.

10. Dispositif de réseau domestique selon la revendication 6, après avoir reçu l'opération d'autorisation de l'utilisateur, le noeud maître de domaine étant en outre configuré pour effectuer les étapes suivantes :
l'envoi d'informations de configuration de nom de domaine du noeud maître de domaine ; et
la réception d'un message d'accusé de réception de configuration de nom de domaine envoyé par le dispositif de réseau domestique, le message d'accusé de réception de configuration de nom de domaine étant utilisé pour indiquer que le dispositif de réseau domestique utilise un nom de domaine compris dans les informations de configuration de nom de domaine du noeud maître de domaine comme nom de domaine du dispositif réseau domestique.

11. Dispositif de réseau domestique selon la revendication 6, le dispositif de réseau domestique étant utilisé comme dispositif d'accès du réseau domestique et étant connecté à un réseau d'opérateur, pour mettre en oeuvre une transmission de données inter-réseaux entre le réseau d'opérateur et le réseau domestique.
